# EUROPÄISCHE PATENTSCHRIFT

(11) **EP 4 049 417 B1**
(45) Veröffentlichungstag und Bekanntmachung des Hinweises auf die Patenterteilung: **22.02.2023**
(21) Anmeldenummer: 20816129.9
(22) Anmeldetag: 24.11.2020
(51) Int. Cl.: H04L 12/403

(54) **VERFAHREN ZUR DATENKOMMUNIKATION ZWISCHEN TEILNEHMERN IN EINEM AUTOMATISIERUNGSNETZWERK, MASTERTEILNEHMER FÜR EIN AUTOMATISIERUNGSNETZWERK UND AUTOMATISIERUNGSNETZWERK**
METHOD FOR DATA COMMUNICATION BETWEEN SUBSCRIBERS IN AN AUTOMATION NETWORK, MASTER SUBSCRIBER FOR AN AUTOMATION NETWORK, AND AUTOMATION NETWORK
PROCÉDÉ DE COMMUNICATION DE DONNÉES ENTRE ABONNÉS DANS UN RÉSEAU D'AUTOMATISATION, ABONNÉ MAÎTRE POUR UN RÉSEAU D'AUTOMATISATION ET RÉSEAU D'AUTOMATISATION

(30) Priorität: 29.11.2019 DE 102019132452
(43) Veröffentlichungstag der Anmeldung: 31.08.2022
(73) Patentinhaber: Beckhoff Automation GmbH, 33415 Verl (DE)
(72) Erfinder: WEBER, Karl, 90518 Altdorf (DE)
(74) Vertreter: Patentanwaltskanzlei WILHELM & BECK
(86) Internationale Anmeldenummer: PCT/EP2020/083231
(87) Internationale Veröffentlichungsnummer: WO 2021/105132

(56) Entgegenhaltungen:
- WO-A1-2013/130778
- DE-A1-102014 112 082
- DE-A1-102018 001 574
- DE-B4-102018 001 574
- US-A1- 2011 153 889

## Beschreibung

Die Erfindung betrifft ein Verfahren zur Datenkommunikation zwischen Teilnehmern in einem Automatisierungsnetzwerk. Die Erfindung betrifft ferner einen Masterteilnehmer für ein Automatisierungsnetzwerk, der ausgebildet ist, das Verfahren zur Datenkommunikation zwischen Teilnehmern eines Automatisierungsnetzwerks auszuführen, und ein entsprechendes Automatisierungsnetzwerk.

Automatisierungsnetzwerke werden häufig als sogenannte "Feldbussysteme" betrieben. Feldbussysteme sind industrielle Bussysteme, die eine echtzeitfähige Steuerung der Maschinen oder Anlagen des Automatisierungsnetzwerks ermöglichen. In der Regel werden die Maschinen oder Anlagen des Automatisierungsnetzwerks mithilfe von speicherprogrammierbaren Steuerungen (SPS) gesteuert. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Kommunikationsteilnehmer Datenpakete über dieselbe Datenleitung, die als leitungsgebundenes oder drahtloses Bussystem ausgebildet sein kann, so muss festgelegt sein, welcher Kommunikationsteilnehmer zu welchem Zeitpunkt senden darf. Zu diesem Zweck gibt es festgelegte Hierarchien und normierte Datenübertragungsprotokolle.

Aus der Druckschrift WO 2013/130778 A1 ist ein Satelliten-Transponder für Breitbandfrequenz-Hopping-Signale mit unverarbeiteter Übertragung bekannt.

Meist arbeiten die Feldbussysteme im sogenannten "Master-Slave-Betrieb". Das heißt, der Masterteilnehmer übernimmt die Steuerung der Prozesse, während die Slaveteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Datenpaketen, die vom Masterteilnehmer an die Slaveteilnehmer ausgegeben werden. Die Slaveteilnehmer können die an sie adressierten Ausgangsdaten auslesen und gegebenenfalls ein Datenpaket an den Masterteilnehmer zurücksenden.

In Automatisierungsnetzwerken, in denen der Datenverkehr mittels über den Austausch von Datenpaketen erfolgt, können die Datenpakete von einem Slaveteilnehmer zu weiteren Slaveteilnehmern weitergeleitet oder den Masterteilnehmer zurückgesendet werden.

Hierbei bezeichnet Weiterleiten das Festlegen von Übertragungswegen für die Übermittlung von Datenpaketen im Automatisierungsnetzwerk. Für Netzwerke mit komplexen Topologien, bei denen Slaveteilnehmer in unterschiedlichen Segmenten des Netzwerks angeordnet sind, können über entsprechende Verbindungselemente Datenpakete in die entsprechenden Segmente, in denen die adressierten Slaveteilnehmer angeordnet sind, weitergeleitet werden. Hierbei kann es auftreten, dass Datenpakete, die aus unterschiedlichen Segmenten des Netzwerks an den Masterteilnehmer zurückgesendet werden, auf dem Rückweg von den Slaveteilnehmern an den Masterteilnehmer aufeinandertreffen, sprich nahezu gleichzeitig an einem dazwischen liegenden Verbindungselement ankommen, wodurch eine zusätzliche Verzögerungen unterschiedlicher Datenpakete hervorgerufen wird, die dann die Reaktionszeit des Systems negativ beeinflusst. Aber nicht nur Überschneidungen auf dem Datenpfad sind kritisch. Durch die Reihenfolge kann es auch passieren, dass einzelne Datenpakete so spät bei einem Device oder Segment ankommen und diese Einrichtung selbst eine starke Verzögerung aufweist, so dass eine Steuerungsaktion, die alle Daten berücksichtigen muss, nur sehr verspätet aufgerufen wird.

Verzögerungen einzelner Datenpakete oder die falsche Reihenfolge beim Aussenden im Master bewirken aber zum Einen eine Verlängerung der Belegungszeit des Netzwerks durch die verzögerten Datenpakete, sprich den Zeitraum, den die Datenpakete benötigen, um nach dem Aussenden durch den Masterteilnehmer zu den entsprechenden Slaveteilnehmern übertragen und vom Masterteilnehmer wieder empfangen zu werden, und während dem das Netzwerk durch die Datenpakete für die Übertragung weiterer Datenpakete blockiert ist. Die Belegungszeit des Netzwerks kann im Allgemeinen auch als Gesamtbelegungszeitdauer bezeichnet werden.

Des Weiteren kann eine Verzögerung von Datenpaketen zur Vermeidung von Überlagerungen der Datenpakete weitere Verzögerungen weiterer Datenpakete nach sich ziehen, um wiederum Kollisionen von den zuvor verzögerten Datenpaketen zu vermeiden. Wobei eine Überlagerung von Datenpaketen dazu führt, dass wenigstens zwei Datenpakete wenigstens teilweise überlappend in gleicher Richtung übertragen werden. Überlagerungen führen dazu, dass die Information der überlagerten Datenpakete nicht eindeutig auslesbar ist, sodass wenigstens eines der überlagerten Datenpakete verzögert werden muss, um eine Überlappung zu vermeiden. Neben Verzögerungen kann auch eine Änderung der Reihenfolge der übertragenen Datenpakete zur Vermeidung von Überlagerungen der Datenpakete eingesetzt werden. Beides kann zu Verzögerungen der gesamten Datenkommunikation zwischen dem Masterteilnehmer und den Slaveteilnehmern und damit verbunden zu einer Herabsetzung der Effektivität und der Performanz des Automatisierungssystems führen.

Zur Verbesserung einer Datenkommunikation, bei der eine Mehrzahl von Datenpaketen zwischen einem Masterteilnehmer und einer Mehrzahl von Slaveteilnehmern ausgetauscht werden, insbesondere zur Vermeidung oder Reduzierung von Verzögerungen einzelner Datenpakete zur Vermeidung von Kollisionen kann es vorteilhaft sein, Datenpakete in bestimmten Reihenfolgen auszusenden, in denen die Datenpakete derart angeordnet sind, dass Kollisionen entweder vollständig vermieden werden können oder aber die Anzahl von notwendigen Verzögerungen beziehungsweise die Gesamtdauer der Verzögerungen reduziert werden können.

Auszusendende Datenpakete in entsprechend vorteilhaften Reihenfolgen anzuordnen, fällt in den Bereich von Scheduling-Problemen. Scheduling Probleme, in denen optimale Lösungen für Abfolgen mehrerer einander bedingender Vorgänge gesucht werden, zeichnen sich durch einen hohen Grad an Komplexität aus und sind meist bereits für eine relativ geringe Anzahl zu berücksichtigender Faktoren in praktikabler Zeit und mit realistischem Rechenaufwand nicht lösbar.

Im Bereich der Datenkommunikation sind aus dem Stand der Technik verschiedene Optimierungsverfahren bekannt, deren Ziel es ist, Reihenfolgen oder Schedules auszusendender Datenpakete mit minimierter Belegungszeit des Netzwerks durch die Datenpakete zu finden. Aus dem Dokument Wisniewski et al. "Scheduling of PROFINET IRT Communication in Redundant Network Topologies" (DOI: 10.1 B/WFCS.2016.7496530 Conference: 12th IEEE World Conference on Factory Communication Systems, At Aveiro, Portugal) ist beispielsweise ein Scheduling Verfahren für PROFINET-Systeme bekannt. Das hier beschriebene Verfahren ist jedoch weiterhin vergleichsweise komplex und verlangt einen substantiellen Rechenaufwand, der letzendlich nicht geeignet ist, ein Optimum zu bestimmen, sondern lediglich eine Näherung an das erstrebte Optimum erzielen kann.

Die Erfindung betrifft Netze, in denen Datenströme auf Teilstrecken parallel ablaufen und es zu Überschneidungen auf anderen Teilstrecken kommen kann. Ziel ist es, die Auswirkungen dieser Überschneidungen auf ein Minimum zu reduzieren. Die Erfindung betrifft eine Koordinierung von Daten-strömen in einer Master Slave Beziehung, wobei Datenströme von zur Datenkommunikation ausgesendeter Datenpakete gemeinsame Datenpfade aufweisen sodass, eine Abfolge der Kommunikation und dem Aussenden der Datenpakete zu berücksichtigen sind.

Es ist daher eine Aufgabe der vorliegenden Erfindung, ein verbessertes Verfahren zur Datenkommunikation zwischen Teilnehmern in einem Automatisierungsnetzwerk bereitzustellen, das eine verringerte Belegungszeit des Netzwerks durch zur Datenkommunikation auszutauschende Datenpakete ermöglicht und geringe Rechenkapazität benötigt. Es ist ferner eine Aufgabe der Erfindung, einen Masterteilnehmer für ein Automatisierungsnetzwerk bereitzustellen, der ausgebildet ist, das erfindungsgemäße Verfahren zur Datenkommunikation zwischen Teilnehmern in einem Automatisierungsnetzwerk auszuführen. Es ist ferner eine Aufgabe der Erfindung, ein entsprechendes Automatisierungsnetzwerk bereitzustellen.

Die Aufgabe wird durch ein Verfahren, einen Masterteilnehmer und ein Automatisierungsnetzwerk gemäß den unabhängigen Ansprüchen gelöst. Bevorzugte Ausführungsformen sind in den abhängigen Ansprüchen angegeben.

Nach einem Aspekt der Erfindung wird ein Verfahren zur echtzeitfähigen Datenkommunikation zwischen Teilnehmern in einem Automatisierungsnetzwerk bereitgestellt, wobei das Automatisierungsnetzwerk einen Masterteilnehmer, Slaveteilnehmer und wenigstens eine Verbindungseinheit umfasst, die über ein Datenleitungsnetz miteinander verbunden sind, wobei der Masterteilnehmer ausgebildet ist, an die Slaveteilnehmer zur Datenkommunikation Datenpakete in einem Umlauf auszusenden, in dem die Datenpakete vom Masterteilnehmer an die Slaveteilnehmer ausgesendet und von den Slaveteilnehmern an den Masterteilnehmer gesendet werden, und wobei die Verbindungseinheit ausgebildet ist, an die Slaveteilnehmer adressierte Datenpakete weiterzuleiten und die Datenpakete an den Masterteilnehmer zurückzuleiten, wobei das Verfahren die Verfahrensschritte umfasst:
Anordnen durch den Masterteilnehmer von n auszusendenden Datenpaketen in einer Sendereihenfolge mit einer Gesamtbelegungszeitdauer der Sendereihenfolge in einem ersten Anordnungsschritt, wobei die Gesamtbelegungszeitdauer einen Zeitraum vom Aussenden durch den Masterteilnehmer eines ersten Bits eines zuerst ausgesendeten Datenpakets bis zu einem Empfangen durch den Masterteilnehmer eines letzten Bits eines zuletzt empfangenen Datenpakets umfasst,

Durchführen durch den Masterteilnehmer eines Optimierungsverfahrens zum Bestimmen einer optimierten Sendereihenfolge mit minimaler Gesamtbelegungszeitdauer in einem Optimierungsschritt, wobei das Optimierungsverfahren eine endliche Anzahl von maximal n*(n-1)/2 paarweisen Vertauschungen von Reihenfolgen von in der Sendereihenfolge aufeinanderfolgenden n Datenpaketen und Bestimmungen der durch die Vertauschungen bewirkten Gesamtbelegungszeitdauern der Sendereihenfolge umfasst, und Aussenden durch den Masterteilnehmer der n Datenpakete in der optimierten Sendereihenfolge an die Slaveteilnehmer in einem Sendeschritt.

Hierdurch wird der technische Vorteil erreicht, dass ein Verfahren zur echtzeitfähigen Datenkommunikation zwischen Teilnehmern in einem Automatisierungsnetzwerk bereitgestellt werden kann, das eine effektive und leistungsfähige Datenkommunikation mit einer verringerten Belegungszeit des Kommunikationsmediums durch die zur Datenkommunikation ausgetauschten Datenpakete ermöglicht. Durch das Durchführen des Optimierungsverfahrens in dem Optimierungsschritt kann eine Sendereihenfolge für die Datenkommunikation auszusendender Datenpakete erreicht werden, die über eine minimale Gesamtbelegungszeitdauer des Kommunikationsmediums durch die auszusendenden Datenpakete verfügt. Über eine endliche Anzahl von maximal n*(n-1)/2 paarweisen Vertauschungsschritten von Reihenfolgen der in den Sendereihenfolgen angeordneten Datenpaketen kann eine Sendereihenfolge mit einer minimalen Belegungszeit ermittelt werden. Insgesamt sind bei einer Sendereihenfolge von n Datenpakete n! (n Fakultät) Vertauschungen der Datenpakete möglich.

Die endliche Anzahl von maximal n*(n-1)/2 paarweisen Vertauschungen der Reihenfolgen der in den Sendereihenfolgen angeordneten Datenpakete kann mit einem vergleichsweise geringen Rechenaufwand durchgeführt werden. Somit wird der technische Vorteil erreicht, dass zum Erzielen einer Sendereihenfolge mit minimaler Belegungszeit lediglich eine vergleichsweise geringe Rechenkapazität benötigt wird. Hierdurch wird der technische Vorteil erreicht, dass das erfindungsgemäße Verfahren zur echtzeitfähigen Datenkommunikation zwischen Teilnehmern in einem Automatisierungsnetzwerk durch einen Masterteilnehmer des Automatisierungsnetzwerks durchgeführt werden kann. Eine zusätzliche Recheneinheit zur Ausführung des Optimierungsverfahrens wird hingegen nicht benötigt.

Durch das Erzielen einer Sendereihenfolge mit minimaler Gesamtbelegungszeitdauer in maximal n*(n-1)/2 paarweisen Vertauschungsschritten von Reihenfolgen von in der Sendereihenfolge aufeinanderfolgenden Datenpaketen kann eine schnelle Optimierung der Sendereihenfolge in Bezug auf die Gesamtbelegungszeitdauer erreicht werden. Auf ein aufwändiges und zeitintensives Optimierungsverfahren zur Bestimmung einer optimierten Sendereihenfolge mit minimaler Gesamtbelegungszeitdauer kann verzichtet werden. Somit kann das erfindungsgemäße Verfahren zur echtzeitfähigen Datenkommunikation zwischen Teilnehmern in einem Automatisierungsnetzwerk problemlos durch den Masterteilnehmer vor jedem Aussenden einer Mehrzahl von Datenpaketen durchgeführt werden. Eine Verzögerung der Datenkommunikation durch ein vorgeschaltetes Durchführen eines zeitintensiven Optimierungsverfahrens kann somit vermieden werden.

In dem Optimierungsschritt wird durch das Durchführen des Optimierungsverfahrens eine Sendereihenfolge mit einer minimalen Gesamtbelegungszeitdauer der in der Sendereihenfolge angeordneten Datenpakete ermittelt. Durch die maximal n*(n-1)/2 paarweisen Vertauschungen der Reihenfolgen der in der Sendereihenfolge aufeinanderfolgenden Datenpakete wird die Sendereihenfolge ermittelt, für die die in dieser Sendereihenfolge ausgesendeten Datenpakete die geringste Verzögerung zur Vermeidung von Kollisionen zwischen Datenpaketen erfahren. Eine minimale Gesamtbelegungszeitdauer einer Sendereihenfolge wird dann erreicht, wenn die auszusendenden Datenpakete der Sendereihenfolge derart angeordnet sind, dass nach Aussenden der Datenpakete in der entsprechenden Sendereihenfolge entweder keine Kollisionen zwischen den ausgesendeten Datenpaketen auftreten oder, für den Fall, dass aufgrund der jeweiligen Topologie des Automatisierungsnetzwerks Kollisionen nicht zu vermeiden sind diese zu einer minimalen Verzögerung der ausgesendeten Datenpakete führen.

Im Folgenden ist ein Automatisierungsnetzwerk ein Automatisierungssystem, in dem ein Masterteilnehmer, mehrere Slaveteilnehmer und wenigstens eine Verbindungseinheit über ein Datenleitungsnetz in einer bestimmten Topologie oder Struktur angeordnet sind. Die Topologie oder Struktur kann beispielsweise eine Baumstruktur, eine Kammstruktur, eine Ringstruktur, eine lineare Struktur oder eine in irgendeiner Form anders geartete Struktur sein. Die Teilnehmer des Automatisierungsnetzwerks sind in einer Master-Slave-Kommunikationsanordnung angeordnet, in der der Masterteilnehmer ausschließlich eingerichtet ist, Kommunikationsanfragen an die Slaveteilnehmer auszusenden.

Ein Masterteilnehmer ist im Folgenden ein Teilnehmer eines Automatisierungsnetzwerks, der ausschließlich legitimiert ist, eine Datenkommunikation mit entsprechenden Slaveteilnehmern zu initiieren. Ein Masterteilnehmer kann beispielsweise ein Feldbusmaster sein.

Ein Slaveteilnehmer ist im Folgenden ein Teilnehmer eines Automatisierungsnetzwerks, der nicht legitimiert ist, eine Datenkommunikation mit weiteren Teilnehmern des Automatisierungsnetzwerks zu initiieren. Ein Slaveteilnehmer ist ausschließlich legitimiert, an einer durch einen Masterteilnehmer initiierten Datenkommunikation teilzunehmen. Ein Slaveteilnehmer kann beispielsweise eine Feldbusklemme, ein Aktor oder ein Sensor des Automatisierungsnetzwerks sein.

Ein Datenleitungsnetz kann im Folgenden beispielsweise ein Feldbussystem sein.

Datenpakete können im Folgenden beispielsweise Telegramme eines entsprechenden Kommunikationsprotokolls sein und wenigstens einen Header und einen Datenabschnitt aufweisen. Beispielsweise können Datenpakete Telegramme eines Ethernet-Protokolls, eines EtherCAT-Protokolls oder eines weiteren Feldbusprotokolls sein.

Eine Verbindungseinheit ist im Folgenden eine Einheit, die ausgestaltet ist, zur Datenkommunikation dienende Datenpakete an entsprechend adressierte Teilnehmer des Automatisierungsnetzwerks weiterzuleiten. Eine Funktionalität einer Verbindungseinheit kann im Übrigen in einen Slaveteilnehmer beziehungsweise in eine Mehrzahl von Slaveteilnehmern und/oder in einen Masterteilnehmer beziehungsweise in eine Mehrzahl von Masterteilnehmern integriert sein.

Im Übrigen lässt sich das erfindungsgemäße Verfahren dazu nutzen, bei entkoppelten Teilnehmern ein Optimum der Gesamtbelegungszeitdauer zu erzielen.

Nach einer Ausführungsform können die Slaveteilnehmer in Segmente unterteilt sein, wobei jedes Segment zumindest einen Slaveteilnehmer umfasst, und wobei die Verbindungseinheit ausgebildet ist, an Slaveteilnehmer eines bestimmten Segments adressierte Datenpakete weiterzuleiten.

Ein Segment ist im Folgenden ein Abschnitt eines Automatisierungsnetzwerks. Ein Segment kann wiederum in Untersegmente aufgeteilt sein. Ein Segment kann wenigstens einen Slaveteilnehmer oder eine Mehrzahl von Slaveteilnehmern des Automatisierungsnetzwerks umfassen. Ein Segment kann über eine entsprechende Verbindungseinheit mit anderen Segmenten des Automatisierungsnetzwerks verbunden sein.

Paarweise Vertauschungen sind im Folgenden die Vertauschungen der Reihenfolge von jeweils zwei in der Sendereihenfolge direkt aufeinanderfolgenden Datenpaketen.

Nach einer Ausführungsform umfasst der erste Anordnungsschritt:
Anordnen der n Datenpakete in einer absteigenden Sendereihenfolge mit absteigenden Individualumlaufzeitdauern der n Datenpakete in einem zweiten Anordnungsschritt, wobei in der absteigenden Sendereihenfolge ein Datenpaket mit längster Individualumlaufzeitdauer an erster und ein Datenpaket mit kürzester Individualumlaufzeitdauer an letzter Position der Sendereihenfolge angeordnet ist, und wobei die Individualumlaufzeitdauer eines jeden Datenpakets einen Zeitraum vom Aussenden durch den Masterteilnehmer eines ersten Bits des Datenpakets bis zu einem Empfangen durch den Masterteilnehmer eines letzten Bits des Datenpakets umfasst.

Hierdurch wird der technische Vorteil erreicht, dass ein effizientes Verfahren zur echtzeitfähigen Datenkommunikation zwischen Teilnehmern in einem Automatisierungsnetzwerk bereitgestellt werden kann.

Die im ersten Anordnungsschritt vorgenommene Voranordnung der n Datenpakete ermöglicht eine Reduzierung der Anzahl der benötigten paarweisen Vertauschungen der Datenpakete im Optimierungsschritt zum Erreichen der optimierten Sendeanordnung mit minimaler Gesamtbelegungszeitdauer. Durch das Anordnen der Datenpakete in der absteigenden Sendereihenfolge in dem zweiten Anordnungsschritt, bei der das Datenpaket mit längster Individualumlaufzeitdauer an erster Position und das Datenpaket mit kürzester Individualumlaufzeitdauer an letzter Position angeordnet wird, kann erreicht werden, dass die Gesamtbelegungszeitdauer der absteigenden Sendereihenfolge gegenüber einer Sendereihenfolge mit beliebig angeordneten Datenpaketen bereits verringert ist, indem das Datenpaket, das für den Umlauf vom aussendenden Masterteilnehmer zum adressierten Slaveteilnehmer und wieder zurück zum Masterteilnehmer den längsten Zeitraum benötigt, als erstes Datenpaket ausgesendet wird.

Sollten für die jeweilige Topologie des Automatisierungsnetzwerks in der absteigenden Sendereihenfolge keine Kollisionen der ausgesendeten Datenpakete auftreten, stellt die absteigende Sendereihenfolge bereits die optimierte Sendereihenfolge mit minimaler Gesamtbelegungszeitdauer dar. Die benötigte Zeit zum Bestimmen der optimierten Sendereihenfolge mit minimaler Gesamtbelegungszeitdauer kann durch die Anordnung der Datenpakete in der absteigenden Sendereihenfolge in dem zweiten Anordnungsschritt gegenüber einer beliebigen Sendereihenfolge bereits substantiell verringert werden.

Nach einer Ausführungsform umfasst der der erste Anordnungsschritt:
Bestimmen einer ersten Empfangszeitmarkierung für jedes der n Datenpakete der absteigenden Sendereihenfolge in einem ersten Bestimmungsschritt, wobei die erste Empfangszeitmarkierung eines beliebigen Datenpakets einer Sendereihenfolge ein Zeitpunkt eines Empfangens des ersten Bits des jeweiligen Datenpakets ist, und wobei ein Wert der ersten Empfangszeitmarkierung einen Zeitraum vom Aussenden durch den Masterteilnehmer des ersten Bits des ersten Datenpakets der Sendereihenfolge bis zum Empfangen durch den Masterteilnehmer des ersten Bits des jeweiligen Datenpakets der Sendereihenfolge umfasst, und Bestimmen einer zweiten Empfangszeitmarkierung für jedes der n Datenpakete der absteigenden Sendereihenfolge, wobei die zweite Empfangszeitmarkierung einer Summe aus dem Wert der ersten Empfangszeitmarkierung und einer Individualbelegungszeitdauer des Datenpakets entspricht, wobei die Individualbelegungszeitdauer eines Datenpakets einen Zeitraum vom Aussenden eines ersten Bits des Datenpakets zu einer ersten Aussendezeitmarkierung bis zum Aussenden eines letzten Bits des Datenpakets zu einer zweiten Aussendezeitmarkierung umfasst, wobei die erste Aussendezeitmarkierung ein Zeitpunkt des Aussendens des ersten Bits des jeweiligen Datenpakets ist, und wobei die zweite Aussendezeitmarkierung ein Zeitpunkt des Aussendens des letzten Bits des Datenpakets ist;
Anordnen der n Datenpakete der absteigenden Sendereihenfolge in einer ansteigenden Sendereihenfolge mit ansteigender erster Empfangszeitmarkierung der n Datenpakete in einem dritten Anordnungsschritt, wobei in der ansteigenden Sendereihenfolge ein Datenpaket mit kleinster erster Empfangszeitmarkierung an erster Position und ein Datenpaket mit größter erster Empfangszeitmarkierung an letzter Position angeordnet ist; und Bestimmen einer korrigierten ersten Empfangszeitmarkierung und einer korrigierten zweiten Empfangszeitmarkierung für ein Datenpaket in der ansteigenden Sendereihenfolge in einem Korrekturschritt, falls die erste Empfangszeitmarkierung des Datenpakets früher ist als die zweite Empfangszeitmarkierung eines in der ansteigenden Sendereihenfolge vor dem Datenpaket angeordneten Datenpaketes, wobei die korrigierte erste Empfangszeitmarkierung des Datenpakets der zweiten Empfangszeitmarkierung des vor dem Datenpaket angeordneten Datenpakets entspricht, und wobei die korrigierte zweite Empfangszeitmarkierung des Datenpakets einer Summe aus der korrigierten ersten Empfangszeitmarkierung und der Individualbelegungszeitdauer des Datenpakets entspricht.

Hierdurch wird der technische Vorteil erreicht, dass ein effizientes Verfahren zur echtzeitfähigen Datenkommunikation zwischen Teilnehmern in einem Automatisierungsnetzwerk bereitgestellt werden kann. Durch die Anordnung der n Datenpakete in einer Sendereihenfolge in dem Anordnungsschritt kann erreicht werden, dass eine optimierte Sendereihenfolge mit minimaler Gesamtbelegungszeitdauer im Optimierungsschritt in einer verringerten Anzahl der maximal n*(n-1)/2 paarweisen Vertauschungen erreicht werden kann.

Durch das Anordnen der Datenpakete aus der absteigenden Sendereihenfolge in der ansteigenden Sendereihenfolge in dem dritten Anordnungsschritt und durch das Durchführen der Korrekturen in dem Korrekturschritt kann eine Empfangsreihenfolge der ausgesendeten Datenpakete inklusive durchzuführender Verzögerungen von Datenpaketen zur Vermeidung von Kollisionen zwischen aufeinanderfolgenden Datenpaketen simuliert werden. Hierdurch kann erreicht werden, dass im folgenden Optimierungsschritt eine vereinfachte Bestimmung der Sendereihenfolge mit minimaler Gesamtbelegungszeitdauer ermöglicht ist.

Eine erste Empfangszeitmarkierung eines Datenpakets ist kleiner beziehungsweise größer als eine erste Empfangszeitmarkierung eines weiteren Datenpakets, wenn ein Wert der ersten Empfangszeitmarkierung des Datenpakets kleiner beziehungsweise größer als ein Wert der ersten Empfangszeitmarkierung des Weiteren Datenpakets ist.

Die erste Aussendezeitmarkierung und die zweite Aussendezeitmarkierung berechnen sich relativ zur ersten Aussendezeitmarkierung des zuerst ausgesendeten Datenpakets. Die erste Aussendezeitmarkierung des zuerst ausgesendeten Datenpakets erhält demnach den Wert 0. Ein Wert einer ersten Aussendezeitmarkierung eines Datenpaktes der Sendereihenfolge umfasst somit einen Zeitraum vom Aussenden durch den Masterteilnehmer eines ersten Bits eines zuerst ausgesendeten Datenpakets bis zum Aussenden durch den Masterteilnehmer eines ersten Bits des jeweiligen Datenpakets.

Eine Summe von Zeitdauern und/oder Zeitmarkierungen ist im Folgenden eine Summe von Werten von Zeitdauern und/oder Werten von Zeitmarkierungen.

Alternativ kann die erste Empfangszeitmarkierung eines beliebigen Datenpakets einen Zeitraum vom Aussenden des ersten Bits des ersten Datenpakets der Sendereihenfolge bis zum Empfangen eines beliebigen Bits des jeweiligen Datenpakets der Sendereihenfolge umfassen, für das an dessen Stelle eine Weiterleitungsentscheidung zu treffen ist. Dies kann auch das letzte Bit des Datenpakets sein.

Nach einer Ausführungsform umfasst eine korrigierte Gesamtbelegungszeitdauer der ansteigenden Sendereihenfolge einen Zeitraum von der ersten Aussendezeitmarkierung des ersten Datenpakets der ansteigenden Sendereihenfolge bis zur korrigierten zweiten Empfangszeitmarkierung des letzten Datenpakets der ansteigenden Sendereihenfolge.

Hierdurch wird der technische Vorteil einer einfach zu bestimmenden korrigierten Gesamtbelegungszeitdauer erreicht. Die korrigierte Gesamtbelegungszeitdauer ist hierbei die Gesamtbelegungszeitdauer der ansteigenden Sendereihenfolge.

Nach einer Ausführungsform umfasst der Anordnungsschritt die Verfahrensschritte:
Bestimmen eines Sende-Offsets für jedes Datenpaket in einem zweiten Bestimmungsschritt, wobei der Sende-Offset eines Datenpakets einer Summe der Individualbelegungszeitdauern der in der Sendereihenfolge dem Datenpaket vorgeordneten Datenpakete entspricht, und
Anordnen der n Datenpakete in der absteigenden Sendereihenfolge in einem vierten Anordnungsschritt derart, dass ein Aussenden eines ersten Bits eines Datenpakets um den Sende-Offset des Datenpakets gegenüber dem Aussenden eines ersten Bits des ersten Datenpakets der absteigenden Sendereihenfolge verzögert ist.

Hierdurch wird der technische Vorteil erreicht, dass durch das Bestimmen des Sendeoffsets und das Anordnen der Datenpakete in der absteigenden Sendereihenfolge, ein Aussenden eines Datenpakets der absteigenden Sendereihenfolge zu dem Aussenden des ersten Datenpakets der absteigenden Sendereihenfolge um den Sende-Offset des jeweiligen Datenpakets verzögert ist. Hierdurch kann erreicht werden, dass ein direktes Aufeinanderfolgen des Aussendens der einzelnen Datenpakete der absteigenden Sendereihenfolge erreicht wird. Es kann somit vermieden werden, dass zwischen dem Aussenden aufeinanderfolgender Datenpakete eine Lücke entsteht, was zu einer Verlängerung der Gesamtbelegungszeitdauer der absteigenden Sendereihenfolge führen kann.

Durch das Bestimmen des Sende-Offsets und das Anordnen der Datenpakete in der absteigenden Sendereihenfolge in dem vierten Anordnungsschritt kann somit die Gesamtbelegungszeitdauer der absteigenden Sendereihenfolge weiter verringert werden und folglich die Anzahl notwendiger Vertauschungen der Reihenfolge aufeinanderfolgender Datenpakete in der absteigenden Sendereihenfolge, die in dem Optimierungsschritt zur Bestimmung einer optimierten Sendereihenfolge mit minimaler Gesamtbelegungszeitdauer benötigt werden, verringert werden.

Nach einer Ausführungsform entspricht die erste Empfangszeitmarkierung eines Datenpakets einer Summe aus dem Sende-Offset und der Individualumlaufzeitdauer des Datenpakets abzüglich der Individualbelegungszeitdauer des Datenpakets.

Hierdurch wird der technische Vorteil einer einfach zu bestimmenden ersten Empfangszeitmarkierung erreicht. Hierdurch wird wiederum ein vereinfachtes Optimierungsverfahren ermöglicht und der für die Durchführung des Optimierungsverfahrens benötigte Rechenaufwand verringert.

Nach einer Ausführungsform umfasst der Optimierungsschritt:
Vertauschen der Reihenfolge eines i-ten Datenpakets und eines auf das i-te Datenpaket folgenden i+1-ten Datenpakets in einer m-ten Sendereihenfolge der n Datenpakete mit einer m-ten Gesamtbelegungszeitdauer der m-ten Sendereihenfolge und Bilden einer m+1-ten Sendereihenfolge mit einer m+1-ten Gesamtbelegungszeitdauer, wobei in der m+1-ten Sendereihenfolge die Reihenfolge des i-ten Datenpakets und des i+1-ten Datenpakets vertauscht ist, und wobei gilt 1≤i≤n-1 und n≥3, in einem ersten Vertauschungsschritt, Überprüfen, ob die m+1-te Gesamtbelegungszeitdauer kürzer ist als die m-te Gesamtbelegungszeitdauer in einem ersten Überprüfungsschritt;
falls die m+1-te Gesamtbelegungszeitdauer nicht kürzer ist als die m-te Gesamtbelegungszeitdauer:
   Zurückvertauschen der Reihenfolge des i-ten Datenpakets und des i+1-ten Datenpakets und Wiederherstellen der m-ten Sendereihenfolge in einem ersten Zurückvertauschungsschritt;
   Überprüfen, ob gilt: i=n-1 in der m-ten Sendereihenfolge in einem zweiten Überprüfungsschritt;
   Falls gilt: i=n-1,
   Aussenden der n Datenpakete auf Basis der m-ten Sendereihenfolge in dem Sendeschritt;
   falls nicht gilt: i=n-1,
   Setzen von i=i+1 in der m-ten Sendereihenfolge in einem ersten Setzschritt;
   Fortfahren mit dem ersten Vertauschungsschritt mit der m-ten Sendereihenfolge;
   falls die m+1-te Gesamtbelegungszeitdauer kürzer ist als die m-te Gesamtbelegungszeitdauer,
   Beibehalten der Vertauschung der Reihenfolge des i-ten Datenpakets und des i+1-ten Datenpakets in der m+1-ten Sendereihenfolge und Setzen von k=i in der m+1-ten Sendereihenfolge in einem zweiten Setzschritt,
   Überprüfen ob gilt: k<2 in der m+1-ten Sendereihenfolge, in einem dritten Überprüfungsschritt;
   Falls gilt: k<2,
   Fortfahren mit dem zweiten Überprüfungsschritt mit der m+1-ten Sendereihenfolge,
   Falls nicht gilt k<2:
      Vertauschen der Reihenfolge des k-ten Datenpakets und des in der m+1-ten Sendereihenfolge dem k-ten Datenpaket vorstehenden k-1-ten Datenpakets und Bestimmen einer m+2-ten Sendereihenfolge mit einer m+2-ten Gesamtbelegungszeitdauer, wobei in der m+2-ten Sendereihenfolge die Reihenfolge des k-ten Datenpakets und des k-1-ten Datenpakets vertauscht ist, in einem zweiten Vertauschungsschritt,
      Überprüfen ob die m+2-te Gesamtbelegungszeitdauer kürzer ist als die m+1-te Gesamtbelegungszeitdauer in einem vierten Überprüfungsschritt,
      Falls die m+2-te Gesamtbelegungszeitdauer nicht kürzer ist als die m+1-te Gesamtbelegungszeitdauer:
         Zurückvertauschen der Reihenfolge des k-ten Datenpakets und des k-1-ten Datenpakets und Wiederherstellen der m+1-ten Sendereihenfolge in einem zweiten Zurückvertauschungsschritt,
         Fortfahren mit dem zweiten Überprüfungsschritt mit der m+1-ten Sendereihenfolge,
         Falls die m+2-te Gesamtbelegungszeitdauer kürzer ist als die m+1-te Gesamtbelegungszeitdauer:
            Beibehalten der Vertauschung der Reihenfolge des k-ten Datenpakets und des k-1-ten Datenpakets in der m+2-ten Sendereihenfolge und Setzen von k=k-1 und m=m+2 in einem dritten Setzschritt,
            Fortfahren mit dem dritten Überprüfungsschritt mit der m-ten Sendereihenfolge.

Hierdurch wird der technische Vorteil erreicht, dass ein effizientes Verfahren zur echtzeitfähigen Datenkommunikation zwischen Teilnehmern in einem Automatisierungsnetzwerk bereitgestellt werden kann. Durch das Ausführen der maximal n*(n-1)/2 paarweisen Vertauschungen von aufeinanderfolgenden Datenpaketen in dem Optimierungsschritt kann ein vergleichsweise einfach durchzuführendes Optimierungsverfahren bereitgestellt werden, das lediglich einen geringen Rechenaufwand benötigt.

In dem Optimierungsverfahren werden zunächst ausgehend vom Anfang der Sendereihenfolge paarweise Vertauschungen der Reihenfolgen aufeinanderfolgender Datenpakete durchgeführt. Nach jeder paarweisen Vertauschung der Reihenfolge aufeinanderfolgender Datenpakete wird die Gesamtbelegungszeitdauer der durch die Vertauschung erzeugten Sendereihenfolge bestimmt und überprüft, ob die Gesamtbelegungszeitdauer der durch die paarweise Vertauschung der Reihenfolge der aufeinanderfolgenden Datenpakete entstandenen Sendereihenfolge kürzer ist als die Gesamtbelegungszeitdauer der Ausgangssendereihenfolge. Ergibt die paarweise Vertauschung der Reihenfolge aufeinanderfolgender Datenpakete keine Verbesserung der Gesamtbelegungszeitdauer, wird mit weiteren paarweisen Vertauschungen von aufeinanderfolgenden Datenpaketen fortgesetzt, bis das Ende der Sendereihenfolge erreicht ist. Ergeben die paarweisen Vertauschungen keine Verbesserung der Gesamtbelegungszeitdauer, wird das Optimierungsverfahren abgebrochen und die Ausgangssendereihenfolge zum Aussenden der Datenpakete verwendet.

Die Ausgangssendereihenfolge ist im Folgenden die Sendereihenfolge, in der die erste paarweise Vertauschung vorgenommen wird.

Ergibt eine paarweise Vertauschung der Reihenfolge aufeinanderfolgender Datenpakete eine Sendereihenfolge mit einer Gesamtbelegungszeitdauer, die kürzer ist als die Gesamtbelegungszeitdauer der Ausgangssendereihenfolge, so wird die Vertauschung der Reihenfolge der aufeinanderfolgenden Datenpakete beibehalten und weitere Vertauschungen aufeinanderfolgender Datenpakete ausgehend von den jeweils vertauschten Datenpaketen in Richtung des Anfangs der Sendereihenfolge fortgesetzt. Hierdurch entsteht ein abwechselndes paarweises Vertauschen von Reihenfolgen aufeinanderfolgender Datenpakete, die jeweils in Richtung des Endes der Sendereihenfolge beziehungsweise in Richtung des Anfangs der Sendereihenfolge fortgesetzt wird, bis eine Sendereihenfolge erreicht wird, deren Gesamtbelegungszeitdauer kürzer ist als die Gesamtbelegungszeitdauern aller zuvor durch paarweises Vertauschen erzeugten Sendereihenfolgen, inklusive der Ausgangssendereihenfolge.

Aufgrund des abwechselnden Fortsetzens der paarweisen Vertauschungen sowohl in Richtung des Endes der Sendereihenfolge beziehungsweise in Richtung des Anfangs der Sendereihenfolge und dadurch dass die paarweise Vertauschung nur fortgesetzt wird, falls die Gesamtbelegungszeitdauer der durch die letzte paarweise Vertauschung erzeugten Sendereihenfolge kürzer ist, als bis zu diesem Vertauschungsschritt bislang erzielten Gesamtbelegungszeitdauern, wird nach einer endlichen Anzahl von maximal n*(n-1)/2 paarweisen Vertauschungen eine Sendereihenfolge mit minimaler Gesamtbelegungszeitdauer erzielt. Hierdurch wird ein zeit- und rechenleistungseffizientes Optimierungsverfahren erreicht, das nach einem endlichen Zeitabstand eine optimierte Sendereihenfolge mit minimaler Gesamtbelegungszeitdauer erzielt.

Nach einer Ausführungsform beginnt der erste Vertauschungsschritt mit dem ersten Datenpaket mit i=1 der ersten Sendereihenfolge mit m=1.

Hierdurch wird der technische Vorteil erreicht, dass das Optimierungsverfahren mit einer Vertauschung der ersten und zweiten Datenpakete einer Sendereihenfolge, insbesondere der Ausgangssendereihenfolge, beginnt. Hierdurch wird erreicht, dass alle Datenpakete der Sendereihenfolge wenigstens einmal mit einem direkt benachbarten Datenpaket vertauscht werden. Damit ist gewährleistet, dass eine Sendereihenfolge mit minimaler Gesamtbelegungszeitdauer erreicht wird.

Nach einer Ausführungsform ist die erste Gesamtbelegungszeitdauer mit m=1 die korrigierte Gesamtbelegungszeitdauer der ansteigenden Sendereihenfolge.

Hierdurch wird der technische Vorteil erreicht, dass ein effizientes Verfahren zur echtzeitfähigen Datenkommunikation zwischen Teilnehmern in einem Automatisierungsnetzwerk bereitgestellt werden kann. Durch die Verwendung der ansteigenden Sendereihenfolge als Ausgangssendereihenfolge zur Durchführung des Optimierungsverfahrens kann die Anzahl benötigter paarweiser Vertauschungen zum Bestimmen der optimierten Sendereihenfolge mit minimaler Gesamtbelegungszeitdauer verringert werden.

Dies kann zu einer Beschleunigung des Optimierungsverfahrens führen, was wiederum die Effizienz des Verfahrens zur Datenkommunikation zwischen Teilnehmern in einem Automatisierungsnetzwerk erhöht, in dem Datenpakete in kürzeren aufeinanderfolgenden Zeiträumen ausgesendet werden können.

Nach einem zweiten Aspekt der Erfindung wird ein Masterteilnehmer für ein Automatisierungsnetzwerk bereitgestellt, wobei der Masterteilnehmer ausgebildet ist, ein erfindungsgemäßes Verfahren zur echtzeitfähigen Datenkommunikation zwischen Teilnehmern eines Automatisierungsnetzwerks auszuführen.

Hierdurch wird der technische Vorteil erreicht, dass ein Masterteilnehmer für ein Automatisierungsnetzwerk bereitgestellt werden kann, der ausgebildet ist, das erfindungsgemäße Verfahren zur echtzeitfähigen Datenkommunikation zwischen Teilnehmern in einem Automatisierungsnetzwerk auszuführen.

Nach einem dritten Aspekt der Erfindung wird ein Automatisierungsnetzwerk mit wenigstes einem erfindungsgemäßen Masterteilnehmer, mehreren Slaveteilnehmern und wenigstens einer Verbindungseinheit, die über ein Datenleitungsnetz miteinander verbunden sind, bereitgestellt, wobei der Masterteilnehmer ausgebildet ist, an die Slaveteilnehmer zur Datenkommunikation Datenpakete in einem Umlauf auszusenden, in dem die Datenpakete vom Masterteilnehmer and die Slaveteilnehmer ausgesendet und von den Slaveteilnehmern an den Masterteilnehmer zurückgesendet werden, und wobei die Verbindungseinheit ausgebildet ist, an die Slaveteilnehmer eines bestimmten Segments adressierte Datenpakete weiterzuleiten und die Datenpakete an den Masterteilnehmer zurückzuleiten.

Hierdurch wird der technische Vorteil erreicht, dass ein Automatisierungsnetzwerk bereitgestellt werden kann, das ausgebildet ist, das erfindungsgemäße Verfahren zur echtzeitfähigen Datenkommunikation zwischen Teilnehmern in einem Automatisierungsnetzwerk auszuführen. Hierdurch wird ein Automatisierungsnetzwerk bereitgestellt, das eine effiziente Datenkommunikation ermöglicht. Durch die effiziente Datenkommunikation kann die Effizienz und Performanz des Automatisierungsnetzwerks erhöht werden.

Nach einer Ausführungsform ist das Automatisierungsnetzwerk in Segmente unterteilt, wobei jedes Segment zumindest einen Slaveteilnehmer umfasst.

Die Erfindung wird anhand der beigefügten Figuren näher erläutert. Hierbei zeigen:
- Fig. 1: eine schematische Darstellung eines Automatisierungsnetzwerks gemäß einer Ausführungsform;
- Fig. 2: ein Flussdiagramm eines Verfahrens zur Datenkommunikation zwischen Teilnehmern in einem Automatisierungsnetzwerk gemäß einer Ausführungsform;
- Fig. 3: ein Flussdiagramm des Verfahrens zur Datenkommunikation zwischen Teilnehmern in einem Automatisierungsnetzwerk gemäß einer weiteren Ausführungsform;
- Fig. 4: ein Flussdiagramm des Verfahrens zur Datenkommunikation zwischen Teilnehmern in einem Automatisierungsnetzwerk gemäß einer weiteren Ausführungsform; und
- Fig. 5: ein Flussdiagramm des Verfahrens zur Datenkommunikation zwischen Teilnehmern in einem Automatisierungsnetzwerk gemäß einer weiteren Ausführungsform.

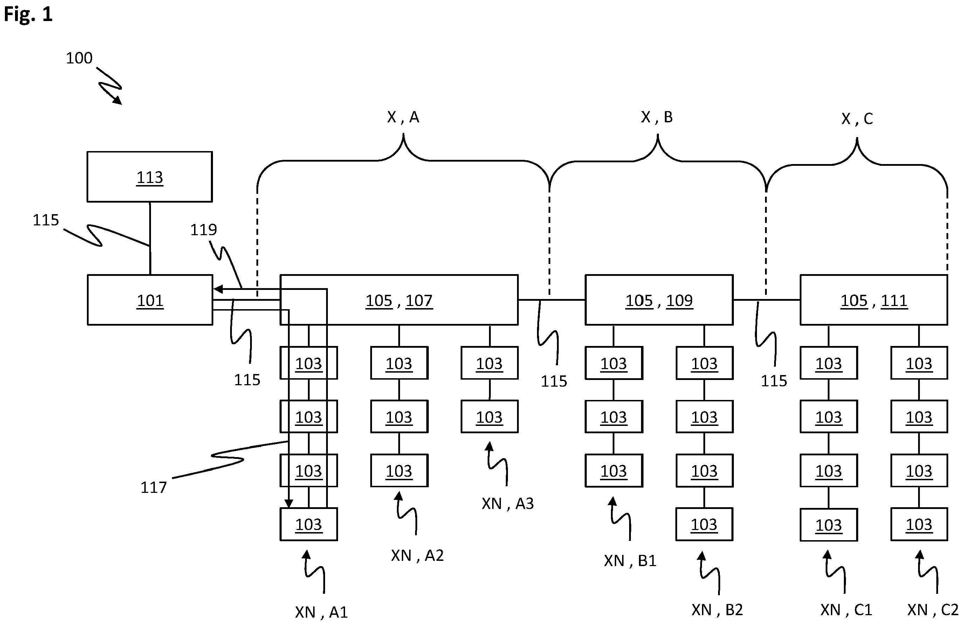

Fig. 1 zeigt eine schematische Darstellung eines Automatisierungsnetzwerks 100 gemäß einer Ausführungsform.

Nach der Ausführungsform in Fig. 1 umfasst das Automatisierungsnetzwerk 100 wenigstes einen Masterteilnehmer 101, mehrere Slaveteilnehmer 103 und wenigstens eine Verbindungseinheit 105, die über ein Datenleitungsnetz 115 verbunden sind, wobei das Automatisierungsnetzwerk 100 in Segmente X unterteilt ist, wobei jedes Segment X zumindest einen Slaveteilnehmer 103 umfasst, wobei der Masterteilnehmer 101 ausgebildet ist, an die Slaveteilnehmer 103 zur Datenkommunikation Datenpakete in einem Umlauf auszusenden, in dem die Datenpakete vom Masterteilnehmer 101 and die Slaveteilnehmer 103 ausgesendet und von den Slaveteilnehmern 103 an den Masterteilnehmer 101 zurückgesendet werden, und wobei die Verbindungseinheit 105 ausgebildet ist, an die Slaveteilnehmer 103 eines bestimmten Segments X adressierte Datenpakete weiterzuleiten und die Datenpakete an den Masterteilnehmer 101 zurückzuleiten.

Gemäß der Ausführungsform in Fig. 1 umfasst das Automatisierungsnetzwerk 100 eine Steuerungseinheit 113, die über ein Datenleitungsnetz 115 mit dem Masterteilnehmer 101 und den Slaveteilnehmern 103 verbunden ist. Das Automatisierungsnetzwerk 100 ist in ein erstes Segment A, ein zweites Segment B und ein drittes Segment C unterteilt, die jeweils linear über das Datenleitungsnetz 115 mit dem Masterteilnehmer 101 verbunden sind. Das erste Segment A umfasst ferner ein erstes Untersegment A1, ein zweites Untersegment A2 und ein drittes Untersegment A3. Das zweite Segment B umfasst ein viertes Untersegment B1 und ein fünftes Untersegment B2. Das dritte Segment C umfasst ein sechstes Untersegment C1 und ein siebtes Untersegment C2.

Das Automatisierungsnetzwerk 100 ist somit in einer Kammstruktur angeordnet, indem die Segmente X linear zueinander angeordnet sind und die entsprechenden Untersegmente XN jeweils ausschließlich mit dem zugehörigen Segment X verbunden sind. Die einzelnen Untersegmente XN weisen jeweils eine Mehrzahl von Slaveteilnehmern 103 auf, die jeweils über das Datenleitungsnetz 115 miteinander verbunden sind. Die einzelnen Untersegmente XN können eine unterschiedliche Anzahl von verschiedenen Slaveteilnehmern 103 umfassen. Alternativ können die Untersegmente XN auch eine gleiche Anzahl von Slaveteilnehmern 103 umfassen.

Alternativ zu der in Fig. 1 dargestellten Struktur kann das Automatisierungsnetzwerk 100 in einer abweichenden Struktur realisiert sein. Beispielsweise kann das Automatisierungsnetzwerk 100 eine von der in Fig. 1 dargestellten abweichende Anzahl von Segmenten X und Untersegmenten XN aufweisen. Ferner kann das Automatisierungsnetzwerk 100 beispielsweise in einer Baumstruktur oder einer Ringstruktur angeordnet sein. Darüber hinaus können die Untersegmente XN eine beliebige Anzahl von Slaveteilnehmern 103 umfassen.

Ferner umfasst das Automatisierungsnetzwerk 100 eine Mehrzahl von Verbindungseinheiten 105, die ausgebildet sind, vom Masterteilnehmer 101 an bestimmte Slaveteilnehmer 103 ausgesendete Datenpakete an die jeweils adressierten Slaveteilnehmer 103 weiterzuleiten beziehungsweise von den Slaveteilnehmern 103 an den Masterteilnehmer 101 ausgesendete Datenpakete an diesen weiterzuleiten. Gemäß Fig. 1 umfasst das erste Segment A eine erste Verbindungseinheit 107, die ausgebildet ist, Datenpakete vom Masterteilnehmer 101 an die in dem ersten Untersegment A1, dem zweiten Untersegment A2 oder dem dritten Untersegment A3 angeordneten Slaveteilnehmer 103 weiterzuleiten. Das zweite Segment B umfasst eine zweite Verbindungseinheit 109, die ausgebildet ist, vom Masterteilnehmer 101 an die in dem vierten Untersegment B1 oder dem fünften Untersegment B2 angeordneten Slaveteilnehmer 103 weiterzuleiten. Das dritte Segment C umfasst eine dritte Verbindungseinheit 111, die ausgebildet ist, vom Masterteilnehmer 101 an die in dem sechsten Untersegment C1 oder dem siebten Untersegment C2 angeordneten Slaveteilnehmer 103 ausgesendete Datenpakete an die entsprechenden Slaveteilnehmer 103 weiterzuleiten. Die Verbindungseinheiten 105 sind entsprechend ausgebildet, von den jeweiligen Slaveteilnehmern 103 an den Masterteilnehmer 101 adressierte Datenpakete entsprechend an den Masterteilnehmer 101 weiterzuleiten.

So wird ein von dem Masterteilnehmer 101 an einen Slaveteilnehmer 103 im ersten Untersegment A1 des ersten Segments A ausgesendetes Datenpaket durch die erste Verbindungseinheit 107 in das erste Untersegment A1 und an den darin angeordneten entsprechenden Slaveteilnehmer 103 weitergeleitet. Das entsprechende Datenpaket durchläuft somit in einer Datenkommunikationshinrichtung 117 einen Abschnitt des Datenleitungsnetzes 115 innerhalb des ersten Segments A und wird von der ersten Verbindungseinheit 107 in das erste Untersegment A1 weitergeleitet. Innerhalb des ersten Untersegments A1 durchläuft das Datenpaket die darin angeordneten Slaveteilnehmer 103, und die entsprechenden Daten des Datenpakets werden durch den adressierten Slaveteilnehmer 103 ausgelesen.

Alternativ können innerhalb eines Segments eine Mehrzahl von Slave-Teilnehmern adressiert sein. Alternativ kann das Segment als Ganzes und damit alle Slave-Teilnehmer des Segments adressiert sein.

Am letzten Slaveteilnehmer 103 des ersten Untersegments A1 angelangt wird das Datenpaket von dem letzten Slaveteilnehmer 103 an den Masterteilnehmer 101 zurückgesendet und das Datenpaket durchläuft in einer Datenkommunikationsrückrichtung 119 das erste Untersegment A1 und wird von der ersten Verbindungseinheit 107 an den Masterteilnehmer 101 zurückgesendet. Die Datenkommunikationshinrichtung 117 und die Datenkommunikationsrückrichtung 119 sind in Fig. 1 durch die zwei vom Masterteilnehmer 101 wegweisenden und zu diesem hinweisenden Pfeile dargestellt.

Analog durchläuft ein Datenpaket, das von dem Masterteilnehmer 101 beispielsweise an einen Slaveteilnehmer 103 des sechsten Untersegments C1 oder des siebten Untersegments C2 des dritten Segments C gesendet wird, in einer Datenkommunikationshinrichtung (in Fig. 1 nicht dargestellt) der Abschnitte des Datenleitungsnetzes 115 durch das erste Segment A, das zweite Segment B und das dritte Segment C und wird von der dritten Verbindungseinheit 111 an das sechste Untersegment C1 oder das siebte Untersegment C2 weitergeleitet. Das entsprechende Datenpaket durchläuft das gesamte Untersegment XN und wird von dem jeweils letzten Slaveteilnehmer 103 des entsprechenden Untersegments XN in einer Datenkommunikationsrückrichtung (in Fig. 1 nicht dargestellt) an den Masterteilnehmer 101 zurückgesendet, wobei die dritte Verbindungseinheit 111 das zurückgesendete Datenpaket an den Masterteilnehmer 101 weiterleitet.

Das zurückgesendete Datenpaket durchläuft in der Datenkommunikationsrückrichtung auch die Abschnitte des Datenleitungsnetzes 115 des dritten Segments C, des zweiten Segments B und des ersten Segments A und wird vom Masterteilnehmer 101 empfangen. Die Datenkommunikationshinrichtung und die Datenkommunikationsrückrichtung für Slaveteilnehmer 103 in dem zweiten Untersegment A2, dem dritten Untersegment A3, dem vierten Untersegment B1, dem fünften Untersegment B2, dem sechsten Untersegment C1 oder dem siebten Untersegment C2 sind in Fig. 1 nicht dargestellt. Entsprechende Datenkommunikationshinrichtungen und Datenkommunikationsrückrichtungen verlaufen den in Fig. 1 für Slaveteilnehmer 103 des ersten Untersegments A1 dargestellten Datenkommunikationshinrichtung 117 und Datenkommunikationsrückrichtung 119 analog.

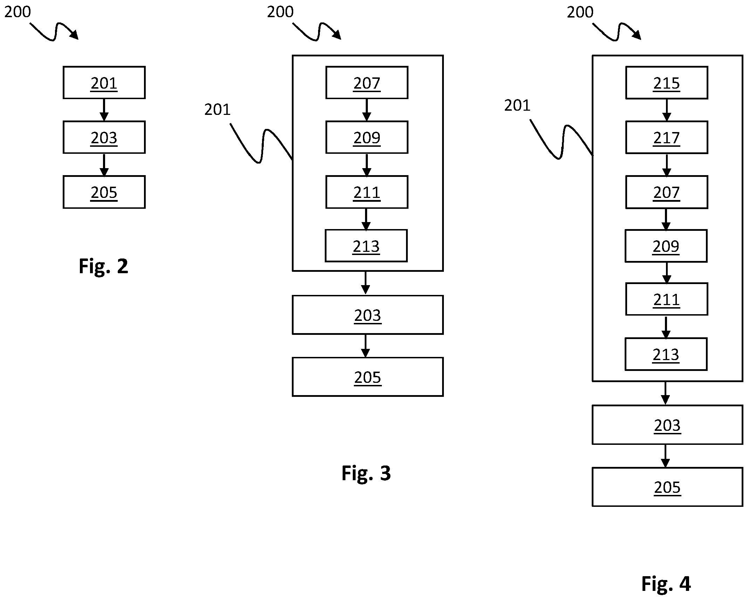

Der Masterteilnehmer 101 ist ausgebildet, ein erfindungsgemäßes Verfahren zur echtzeitfähigen Datenkommunikation zwischen Teilnehmern in einem Automatisierungsnetzwerk 100 auszuführen. Für eine detaillierte Beschreibung des erfindungsgemäßen Verfahrens zur echtzeitfähigen Datenkommunikation zwischen Teilnehmern in einem Automatisierungsnetzwerk 100 wird auf die Figurenbeschreibung zu den Figuren 2 bis 5 verwiesen.

Das Datenleitungsnetz 115 kann beispielsweise ein Feldbussystem, insbesondere ein Ethernet- oder ein EtherCAT- oder ein Profibus-System sein. Der Masterteilnehmer 101 kann beispielsweise ein Feldbusmaster sein. Ein Slaveteilnehmer 103 kann beispielsweise ein Feldbusgerät, insbesondere eine Feldbusklemme, ein Aktor oder ein Sensor sein. Eine Verbindungseinheit 105 kann ausgebildet sein, von dem Masterteilnehmer an entsprechende Slaveteilnehmer 103 ausgesendete Datenpakete an die entsprechenden Slaveteilnehmer 103 weiterzuleiten beziehungsweise von den Slaveteilnehmern 103 an den Masterteilnehmer 101 zurückgesendete Datenpakete an den Masterteilnehmer 101 weiterzuleiten. Eine Verbindungseinheit 105 kann beispielsweise als ein Switch ausgebildet sein.

Die Verbindungseinheiten 105 können ferner ausgebildet sein, Datenpakete zu verzögern, um so eine Kollision von aufeinanderfolgenden Datenpaketen zu verhindern. Insbesondere auf der Datenkommunikationsrückrichtung befindliche Datenpakete können somit durch verschiedene Verbindungseinheiten 105 der einzelnen Segmente X in der Weiterleitung an den Masterteilnehmer 101 so lange aufgehalten werden, bis ein vorangehendes Datenpaket von der entsprechenden Verbindungseinheit 105 vollständig an den Masterteilnehmer 101 weitergeleitet worden ist. Nach vollständiger Weiterleitung eines vorangehenden Datenpakets durch die entsprechende Verbindungseinheit 105 kann ein nachfolgende Datenpaket von der entsprechenden Verbindungseinheit 105 vollständig an den Masterteilnehmer 101 weitergeleitet werden. Somit können Kollisionen zwischen verschiedenen Datenpaketen verhindert werden.

Die Verbindungseinheiten 105 können insbesondere ausgebildet sein, die vom Masterteilnehmer 101 an die Slaveteilnehmer 103 oder von den Slaveteilnehmern 103 an den Masterteilnehmer 101 ausgesendeten Datenpakete an die entsprechenden Slaveteilnehmer 103 oder an den Masterteilnehmer 101 in einem Cut-Through-Verfahren oder in einem Store-and-Forward-Verfahren weiterzuleiten.

Das Automatisierungssystem 100 in der Ausführungsform in Fig. 1 ist lediglich beispielhafter Natur und dient ausschließlich illustrativen Zwecken. Alternativ zu der in Fig. 1 gezeigten Ausführungsform kann das Automatisierungssystem 100 auch anders ausgestaltet sein. Insbesondere kann die Anordnung Anzahl der Slaveteilnehmer 103 variieren. Analog kann das Automatiserungssystem 100 eine andere Anzahl von Segmenten X aufweisen. Insbesondere können die Slaveteilnehmer 103 im Automatisierungssystem 100 nicht in Segmenten X angeordnet sein.

Fig. 2 zeigt ein Flussdiagramm eines Verfahrens 200 zur Datenkommunikation zwischen Teilnehmern in einem Automatisierungsnetzwerk 100 gemäß einer Ausführungsform.

Das erfindungsgemäße Verfahren 200 wird im Folgenden in Bezug auf das zu Fig. 1 beschriebene Automatisierungsnetzwerk 100 beschrieben werden. Das erfindungsgemäße Verfahren 200 ist aber nicht auf das Automatisierungsnetzwerk 100 mit der in Fig. 1 dargestellten Struktur beschränkt, sondern ist auch auf Automatisierungsnetzwerke mit abweichenden Strukturen anwendbar.

Gemäß der Ausführungsform in Fig. 2 umfasst das Automatisierungsnetzwerk 100 wenigstes einen Masterteilnehmer 101, mehrere Slaveteilnehmer 103 und wenigstens eine Verbindungseinheit 105, die über ein Datenleitungsnetz 115 verbunden sind, wobei das Automatisierungsnetzwerk 100 in Segmente X unterteilt ist, wobei jedes Segment X zumindest einen Slaveteilnehmer 103 umfasst, wobei der Masterteilnehmer 101 ausgebildet ist, an die Slaveteilnehmer 103 zur Datenkommunikation Datenpakete in einem Umlauf auszusenden, in dem die Datenpakete vom Masterteilnehmer 101 and die Slaveteilnehmer 103 ausgesendet und von den Slaveteilnehmern 103 an den Masterteilnehmer 101 zurückgesendet werden, und wobei die Verbindungseinheit 105 ausgebildet ist, an die Slaveteilnehmer 103 eines bestimmten Segments X adressierte Datenpakete weiterzuleiten und die Datenpakete an den Masterteilnehmer 101 zurückzuleiten.

Gemäß der Ausführungsform umfasst das Verfahren 200 die Verfahrensschritte: Anordnen durch den Masterteilnehmer 101 von n auszusendenden Datenpaketen in einer Sendereihenfolge mit einer Gesamtbelegungszeitdauer der Sendereihenfolge in einem ersten Anordnungsschritt 201, wobei die Gesamtbelegungszeitdauer einen Zeitraum vom Aussenden durch den Masterteilnehmer 101 eines ersten Bits eines zuerst ausgesendeten Datenpakets bis zu einem Empfangen durch den Masterteilnehmer 101 eines letzten Bits eines zuletzt empfangenen Datenpakets umfasst,

Durchführen durch den Masterteilnehmer 101 eines Optimierungsverfahrens zum Bestimmen einer optimierten Sendereihenfolge mit minimaler Gesamtbelegungszeitdauer in einem Optimierungsschritt 203, wobei das Optimierungsverfahren eine endliche Anzahl von maximal n*(n-1)/2 paarweisen Vertauschungen von Reihenfolgen von in der Sendereihenfolge aufeinanderfolgenden n Datenpaketen und Bestimmungen der durch die Vertauschungen bewirkten Gesamtbelegungszeitdauern der Sendereihenfolge umfasst, und Aussenden durch den Masterteilnehmer 101 der n Datenpakete in der optimierten Sendereihenfolge an die Slaveteilnehmer 103 in einem Sendeschritt 205.

Der Masterteilnehmer 101 ordnet in einem ersten Anordnungsschritt 201 n auszusendende Datenpakete in einer Sendereihenfolge mit einer Gesamtbelegungszeitdauer an. Die n Datenpakete können eine beliebige Anzahl von auszusendenden Datenpaketen sein, wobei n eine beliebige natürliche Zahl sein kann. Eine Sendereihenfolge kann eine beliebige Reihenfolge der n auszusendenden Datenpakete sein, in der Datenpakete nacheinander angeordnet sind, sodass die n auszusendenden Datenpakete durch den Masterteilnehmer 101 nacheinander gemäß der Sendereihenfolge ausgesendet werden können.

Die n auszusendenden Datenpakete können in der Sendereihenfolge beliebig angeordnet sein. Wie zu Fig. 1 ausgeführt, kann eine Datenkommunikation zwischen dem Masterteilnehmer 101 und den Slaveteilnehmern 103 in einem Umlaufverfahren durchgeführt werden, in dem die durch den Masterteilnehmer 101 an die entsprechenden Slaveteilnehmer 103 ausgesendeten Datenpakete nach Auslesen der in den Datenpaketen enthaltenen Daten durch die entsprechenden Slaveteilnehmer 103 an den Masterteilnehmer 101 zurückgesendet werden. Die von dem Masterteilnehmer 101 ausgesendeten n Datenpakete werden somit nach Durchlauf durch die entsprechenden Slaveteilnehmer 103 durch den Masterteilnehmer 101 abschließend wieder empfangen.

Eine Gesamtbelegungszeitdauer einer Sendereihenfolge der n auszusendenden Datenpakete umfasst damit einen Zeitraum vom Aussenden eines ersten Bits eines zuerst ausgesendeten Datenpakets bis zum Empfang eines letzten Bits eines zuletzt empfangenen Datenpakets durch den Masterteilnehmer 101. Eine Gesamtbelegungszeitdauer der Sendereihenfolge beschreibt damit einen Zeitraum, in dem die n ausgesendeten Datenpakete zwischen dem Masterteilnehmer 101 und den Slaveteilnehmern 103 über das Datenleitungsnetz 115 übertragen werden.

In einem Optimierungsschritt 203 führt der Masterteilnehmer 101 ein Optimierungsverfahren durch, um eine optimierte Sendereihenfolge mit minimaler Gesamtbelegungszeitdauer zu bestimmen. Hierzu führt der Masterteilnehmer 101 eine endliche Anzahl von paarweisen Vertauschungen von Reihenfolgen von in der Sendereihenfolge aufeinanderfolgenden n Datenpaketen durch.

Eine paarweise Vertauschung der Reihenfolge von aufeinanderfolgenden Datenpaketen umfasst das Vertauschen eines Datenpakets mit einem in der Sendereihenfolge direkt voranstehenden oder direkt nachfolgenden Datenpaket, sodass in der Sendereihenfolge zwei direkt hintereinander angeordnete Datenpakete jeweils die Position des in der Sendereihenfolge direkt voranstehenden oder nachfolgenden Datenpakets einnehmen.

Nach jeder paarweisen Vertauschung von zwei aufeinanderfolgenden Datenpaketen wird durch den Masterteilnehmer 101 die Gesamtbelegungszeitdauer der Sendereihenfolge mit den jeweils paarweise vertauschten Datenpaketen bestimmt. Nach maximal n*(n-1)/2 paarweisen Vertauschungen der Datenpakete in der Sendereihenfolge durch den Masterteilnehmer 101 ermittelt dieser die optimierte Sendereihenfolge mit minimaler Gesamtbelegungszeitdauer.

In einem Sendeschritt 205 sendet der Masterteilnehmer 101 die n auszusendenden Datenpakete gemäß der optimierten Sendereihenfolge an die Slaveteilnehmer 103.

Ergibt sich durch die paarweisen Vertauschungen der Reihenfolgen aufeinanderfolgender Datenpakete in der Sendereihenfolge keine optimierte Sendereihenfolge mit minimaler Gesamtbelegungszeitdauer, sprich: wird durch die paarweisen Vertauschungen keine Verbesserung der Gesamtbelegungszeitdauer gegenüber der ursprünglichen Sendereihenfolge erzielt, so werden die n auszusendenden Datenpakete gemäß der ursprünglichen Sendereihenfolge ausgesendet.

Fig. 3 zeigt ein Flussdiagramm des Verfahrens 200 zur Datenkommunikation zwischen Teilnehmern in einem Automatisierungsnetzwerk 100 gemäß einer weiteren Ausführungsform.

Sofern nicht anderslautend angeführt, umfasst das Verfahren 200 gemäß der Ausführungsform in Fig. 3 die zu Fig. 2 beschriebenen Verfahrensschritte.

Nach der Ausführungsform in Fig. 3 umfasst der erste Anordnungsschritt 201 die Verfahrensschritte:
Anordnen der n Datenpakete in einer absteigenden Sendereihenfolge mit absteigenden Individualumlaufzeitdauern der n Datenpakete in einem zweiten Anordnungsschritt 207, wobei in der absteigenden Sendereihenfolge ein Datenpaket mit längster Individualumlaufzeitdauer an erster und ein Datenpaket mit kürzester Individualumlaufzeitdauer an letzter Position der Sendereihenfolge angeordnet ist, und wobei die Individualumlaufzeitdauer eines jeden Datenpakets einen Zeitraum vom Aussenden durch den Masterteilnehmer 101 eines ersten Bits des Datenpakets bis zu einem Empfangen durch den Masterteilnehmer 101 eines letzten Bits des Datenpakets umfasst;
Bestimmen einer ersten Empfangszeitmarkierung für jedes der n Datenpakete der absteigenden Sendereihenfolge in einem ersten Bestimmungsschritt 209, wobei die erste Empfangszeitmarkierung eines beliebigen Datenpakets einer Sendereihenfolge ein Zeitpunkt eines Empfangens des ersten Bits des jeweiligen Datenpakets ist, und wobei ein Wert der ersten Empfangszeitmarkierung einen Zeitraum vom Aussenden durch den Masterteilnehmer 101 des ersten Bits des ersten Datenpakets der Sendereihenfolge bis zum Empfangen durch den Masterteilnehmer 101 des ersten Bits des jeweiligen Datenpakets der Sendereihenfolge umfasst, und Bestimmen einer zweiten Empfangszeitmarkierung für jedes der n Datenpakete der absteigenden Sendereihenfolge, wobei die zweite Empfangszeitmarkierung einer Summe aus dem Wert der ersten Empfangszeitmarkierung und einer Individualbelegungszeitdauer des Datenpakets entspricht, wobei die Individualbelegungszeitdauer eines Datenpakets einen Zeitraum vom Aussenden eines ersten Bits des Datenpakets zu einer ersten Aussendezeitmarkierung bis zum Aussenden eines letzten Bits des Datenpakets zu einer zweiten Aussendezeitmarkierung umfasst;
Anordnen der n Datenpakete der absteigenden Sendereihenfolge in einer ansteigenden Sendereihenfolge mit ansteigender erster Empfangszeitmarkierung der n Datenpakete in einem dritten Anordnungsschritt 211, wobei in der ansteigenden Sendereihenfolge ein Datenpaket mit kleinster erster Empfangszeitmarkierung an erster Position und ein Datenpaket mit größter erster Empfangszeitmarkierung an letzter Position angeordnet ist; und Bestimmen einer korrigierten ersten Empfangszeitmarkierung und einer korrigierten zweiten Empfangszeitmarkierung für ein Datenpaket in der ansteigenden Sendereihenfolge in einem Korrekturschritt 213, falls die erste Empfangszeitmarkierung des Datenpakets früher ist als die zweite Empfangszeitmarkierung eines in der ansteigenden Sendereihenfolge vor dem Datenpaket angeordneten Datenpakets, wobei die korrigierte erste Empfangszeitmarkierung des Datenpakets der zweiten Empfangszeitmarkierung des vor dem Datenpaket angeordneten Datenpakets entspricht, und wobei die korrigierte zweite Empfangszeitmarkierung des Datenpakets einer Summe aus der korrigierten ersten Empfangszeitmarkierung und der Individualbelegungszeitdauer des Datenpakets entspricht.

In einem zweiten Anordnungsschritt 207 ordnet der Masterteilnehmer 101 die n Datenpakete der Sendereihenfolge in einer absteigenden Sendereihenfolge mit absteigender Individualumlaufzeitdauer der n Datenpakete an, wobei in der absteigenden Sendereihenfolge das Datenpaket mit längster Individualumlaufzeitdauer an erster und das Datenpaket mit kürzester Individualumlaufzeitdauer an letzter Position der absteigenden Sendereihenfolge angeordnet ist. Eine Individualumlaufzeitdauer eines Datenpakets umfasst hierbei einen Zeitraum vom Aussenden durch den Masterteilnehmer 101 eines ersten Bits des Datenpakets bis zum Empfangen durch den Masterteilnehmer 101 eines letzten Bits des Datenpakets. Wie oben bereits erwähnt, umfasst hierzu eine Datenkommunikation zwischen dem Masterteilnehmer 101 und den Slaveteilnehmern 103 ein Aussenden eines Datenpakets durch den Masterteilnehmer 101 an entsprechende Slaveteilnehmer 103 und ein Zurücksenden des Datenpakets durch die adressierten Slaveteilnehmer 103 und ein entsprechendes Empfangen des zurückgesendeten Datenpakets durch den Masterteilnehmer 101.

Der Masterteilnehmer 101 kann hierzu für jedes Datenpaket eine entsprechende Individualumlaufzeitdauer bestimmen. Eine Individualumlaufzeitdauer ergibt sich hierbei aus einer Summe aus der zweifachen Latenz, einer Individualbelegungszeitdauer des Datenpakets und einer Individualumlaufzeitdauer des Datenpakets für das entsprechende Segment. Die Latenz des Datenpakets umfasst hierbei einen Zeitraum, der für die Datenübertragung des Datenpakets vom Masterteilnehmer 101 zu der entsprechenden Verbindungseinheit 105 des jeweiligen Segments X, in dem der Slaveteilnehmer 103 angeordnet ist, an den das auszusendende Datenpaket adressiert ist.

Eine Individualbelegungszeitdauer des Datenpakets umfasst einen Zeitraum vom Aussenden eines ersten Bits des Datenpakets zu einer ersten Aussendezeitmarkierung bis zum Aussenden eines letzten Bits des Datenpakets zu einer zweiten Aussendezeitmarkierung durch den Masterteilnehmer 101. Eine Individualbelegungszeitdauer des Datenpakets im entsprechenden Segment umfasst hierbei einen Zeitraum vom Empfangen des ersten Bits des Datenpakets durch die entsprechende Verbindungseinheit 105 des jeweiligen Segments X bis zum Aussenden des letzten Bits des Datenpakets durch die entsprechende Verbindungseinheit 105 an den Masterteilnehmer 101.

Die Individualumlaufzeitdauer des Datenpakets im entsprechenden Segment beschreibt damit den Zeitraum, den das jeweilige Datenpaket benötigt, um das entsprechende Segment X beziehungsweise das dazugehörige Untersegment XN, in dem der adressierte Slaveteilnehmer 103 angeordnet ist, vollständig zu durchlaufen, sodass das jeweilige Datenpaket nach Auslesen durch den adressierten Slaveteilnehmer 103 durch die entsprechende Verbindungseinheit 105 an den Masterteilnehmer 101 zurückgesendet werden kann. Für eine Datenkommunikation zwischen dem Masterteilnehmer 101 und den Slaveteilnehmern 103, für die das Cut-Through-Verfahren verwendet wird, entspricht die Individualbelegungszeitdauer eines Datenpakets der Framelänge des entsprechenden Datenpakets.

Die Individualumlaufzeitdauern der n Datenpakete der Sendereihenfolge können somit in Abhängigkeit des entsprechenden adressierten Slaveteilnehmers 103 variieren. In Bezug auf das Automatisierungsnetzwerk 100 in Fig. 1 variieren die Individualumlaufzeitdauern von Datenpaketen, die an Slaveteilnehmer 103 in unterschiedlichen Untersegmenten XN des gleichen Segments X gesendet werden.

Datenpakete, die an Slaveteilnehmer 103 unterschiedlicher Untersegmente XN adressiert sind, durchlaufen unterschiedliche Strecken desselben Segments X und durchlaufen eine unterschiedliche Anzahl von Slaveteilnehmern 103, sodass die entsprechenden Datenpakete somit eine unterschiedliche Individualumlaufzeitdauer innerhalb des Segments aufweisen, sprich unterschiedliche Zeitdauern benötigen, die entsprechenden Untersegmente XN des jeweiligen Segments X zu durchlaufen, bevor diese durch die entsprechende Verbindungseinheit 105 an den Masterteilnehmer 101 zurückgesendet werden können.

Datenpakete, die an Slaveteilnehmer 103 in unterschiedlichen Segmenten X adressiert sind, können folglich ebenfalls in ihrer Individualumlaufzeitdauer variieren, da derartige Datenpakete eine verschiedene Anzahl von Segmenten X und unterschiedliche Strecken innerhalb der Segmente X durchlaufen, bevor diese durch die entsprechenden Verbindungseinheiten 105 an den Masterteilnehmer 101 zurückgesendet werden können.

Nach Bestimmen der Individualumlaufzeitdauer eines jeden Datenpakets, in Abhängigkeit der für das jeweilige Datenpaket entsprechend adressierten Slaveteilnehmer 103, ordnet der Masterteilnehmer 101 die Datenpakete der Sendereihenfolge mit absteigender Individualumlaufzeitdauer in der absteigenden Sendereihenfolge an.

In einem ersten Bestimmungsschritt 209 bestimmt der Masterteilnehmer 101 für jedes der n Datenpakete der absteigenden Sendereihenfolge eine erste Empfangszeitmarkierung.

Die erste Empfangszeitmarkierung eines beliebigen Datenpakets der absteigenden Sendereihenfolge beschreibt hierbei einen Zeitraum vom Aussenden durch den Masterteilnehmer 101 des ersten Bits des ersten Datenpakets der absteigenden Sendereihenfolge bis zum Empfangen durch den Masterteilnehmer 101 des ersten Bits des jeweiligen Datenpakets der absteigenden Sendereihenfolge.

In dem ersten Bestimmungsschritt 209 bestimmt der Masterteilnehmer 101 ferner eine zweite Empfangszeitmarkierung für jedes der n Datenpakete der absteigenden Sendereihenfolge. Die zweite Empfangszeitmarkierung eines jeden Datenpakets der absteigenden Sendereihenfolge beschreibt eine Summe aus der ersten Empfangszeitmarkierung und einer Individualbelegungszeitdauer des jeweiligen Datenpakets. Wie oben bereits erläutert, beschreibt die Individualbelegungszeitdauer eines Datenpakets einen Zeitraum vom Aussenden eines ersten Bits des Datenpakets zu einer ersten Aussendezeitmarkierung bis zum Aussenden eines letzten Bits des Datenpakets zu einer zweiten Aussendezeitmarkierung durch den Masterteilnehmer 101. Für eine Datenkommunikation zwischen dem Masterteilnehmer 101 und den Slaveteilnehmern 103 in einem Cut-Through-Verfahren entspricht die Individualbelegungszeitdauer eines Datenpakets der Framelänge des jeweiligen Datenpakets.

In einem dritten Anordnungsschritt 211 ordnet der Masterteilnehmer 101 die n Datenpakete der absteigenden Sendereihenfolge in einer ansteigenden Sendereihenfolge an, wobei das erste Datenpaket der ansteigenden Sendereihenfolge die kleinste erste Empfangszeitmarkierung und das letzte Datenpaket der ansteigenden Sendereihenfolge die größte erste Empfangszeitmarkierung aufweist.

In einem Korrekturschritt 213 bestimmt der Masterteilnehmer 101 für jedes Datenpaket der ansteigenden Sendereihenfolge eine korrigierte erste Empfangszeitmarkierung, falls die erste Empfangszeitmarkierung des jeweiligen Datenpakets früher ist als die zweite Empfangszeitmarkierung eines in der ansteigenden Sendereihenfolge vor dem Datenpaket angeordneten Datenpakets. Eine korrigierte erste Empfangszeitmarkierung eines Datenpakets der ansteigenden Sendereihenfolge entspricht hierbei einer zweiten Empfangszeitmarkierung eines in der ansteigenden Sendereihenfolge vor dem Datenpaket angeordneten Datenpakets. Zusätzlich zur korrigierten ersten Empfangszeitmarkierung bestimmt der Masterteilnehmer 101 für die jeweiligen Datenpakete eine korrigierte zweite Empfangszeitmarkierung. Die korrigierte zweite Empfangszeitmarkierung entspricht hierbei einer Summe aus der korrigierten ersten Empfangszeitmarkierung und der Individualbelegungszeitdauer des jeweiligen Datenpakets.

Für eine detailliertere Beschreibung der jeweiligen Größen und der beschriebenen Verfahrensschritte wird auf die Figurenbeschreibung zu Fig. 4 und insbesondere auf die dort angeführten Tabellen 1 bis 3 und die zu den entsprechenden Tabellen angeführten Erläuterungen verwiesen.

Fig. 4 zeigt ein Flussdiagramm des Verfahrens 200 zur Datenkommunikation zwischen Teilnehmern in einem Automatisierungsnetzwerk 100 gemäß einer weiteren Ausführungsform.

Sofern nicht anderslautend angeführt, umfasst das Verfahren 200 gemäß der Ausführungsform in Fig. 4 die zu Fig. 2 oder Fig. 3 beschriebenen Verfahrensschritte.

In einem zweiten Bestimmungsschritt 215 bestimmt der Masterteilnehmer 101 für jedes Datenpaket einen Sende-Offset. Der Sende-Offset eines Datenpakets in einer Sendereihenfolge entspricht dabei einer Summe der Individualbelegungszeitdauern der in der jeweiligen Sendereihenfolge dem jeweiligen Datenpaket vorgeordneten Datenpakete.

In einem vierten Anordnungsschritt 217 ordnet der Masterteilnehmer 101 ferner die n Datenpakete in der absteigenden Sendereihenfolge derart an, dass ein Aussenden eines ersten Bits eines Datenpakets der absteigenden Sendereihenfolge um den Sende-Offset des jeweiligen Datenpakets gegenüber dem Aussenden eines ersten Bits des ersten Datenpakets der absteigenden Sendereihenfolge verzögert ist. Der Sende-Offset eines Datenpakets entspricht dabei einer Summe der Individualbelegungszeitdauern der dem jeweiligen Datenpaket vorgeordneten Datenpakete. Jedes der n Datenpakete der absteigenden Sendereihenfolge ist somit gegenüber dem direkt vor dem Datenpaket angeordneten Datenpaket um die jeweilige Individualbelegungszeitdauer des dem entsprechenden Datenpaket direkt vorgeordneten Datenpakets verzögert, sodass ein Aussenden eines ersten Bits eines Datenpakets der absteigenden Sendereihenfolge nicht erfolgt, bevor das letzte Bit des dem jeweiligen Datenpaket direkt vorgeordneten Datenpakets ausgesendet ist.

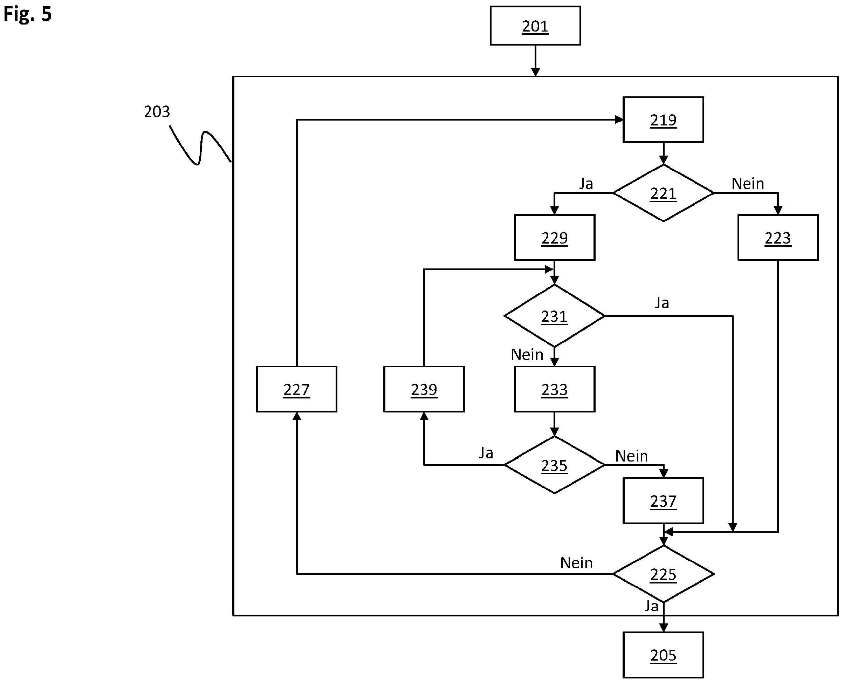

In den nachfolgenden Tabellen 1 bis 3 sind die oben beschriebenen Verfahrensschritte sowie die in diesen auftretenden Größen auf Basis des in Fig. 1 dargestellten Automatisierungsnetzwerks 100 anhand exemplarischer Zahlenwerte beispielhaft dargestellt. Die in den Tabellen 1 bis 3 wie auch in den zu Fig. 5 erläuterten Tabellen 4 bis 5 angegebenen Zahlenwerte beziehungsweise Zeiteinheiten entsprechen keinen realen Größenangaben und dienen ausschließlich zu illustrativen Zwecken.

**Tabelle 1**

| Sendereihenfolge mit Individualumlaufzeitdauern | | | | |
|---|---|---|---|---|
| | Latenz | Individual-belegungs-zeitdauer | Individual-teilumlaufzeitdauer (Segment) | Individualumlaufzeitdauer |
| DA1 | 4 | 16 | 280 | 304 |
| DA2 | 4 | 20 | 320 | 348 |
| DA3 | 4 | 24 | 400 | 432 |
| DB1 | 10 | 12 | 160 | 192 |
| DB2 | 10 | 24 | 380 | 424 |
| DC1 | 16 | 12 | 180 | 224 |
| DC2 | 16 | 16 | 280 | 328 |

In Tabelle 1 sind sieben vom Masterteilnehmer 101 an die Slaveteilnehmer 103 des Automatisierungsnetzwerks 100 auszusendende Datenpakete in einer beliebigen Sendereihenfolge angeordnet. Die einzelnen Datenpakete sind mit den links von der Tabelle 1 angeordneten Bezeichnungen DA1, DA2, DA3, DB1, DB2, DC1 und DC2 gekennzeichnet. Die Kennzeichnungen der einzelnen Datenpakete entsprechen den Untersegmenten DA1 bis DC2 des in Fig. 1 dargestellten Automatisierungsnetzwerks 100. Das Datenpaket DA1 ist somit an die Slaveteilnehmer 103 des ersten Untersegments DA1 adressiert, während das Datenpaket DC2 an die Slaveteilnehmer 103 des siebten Untersegments DC2 des Automatisierungsnetzwerks 100 in Fig. 1 adressiert ist.

In der ersten Spalte der Tabelle 1 ist für jedes Datenpaket eine Latenz (Lat) angeführt. Die Latenz betrifft einen Zeitraum, der für ein Datenpaket benötigt wird, vom Masterteilnehmer 101 an das das jeweilige Untersegment XN umfassende Segment X übertragen zu werden. Die Latenzen der unterschiedlichen Datenpakete unterscheiden sich folglich nach Entfernung der jeweiligen Segmente X zum Masterteilnehmer 101, sodass die Datenpakete DA1, DA2, DA3 die geringste Latenz aufweisen, während die Datenpakete DC1 und DC2, die jeweils bis zum dritten Segment C übertragen werden, die größte Latenz aufweisen.

In der zweiten Spalte der Tabelle 1 ist für jedes Datenpaket eine Individualbelegungszeitdauer angegeben. Die Individualbelegungszeitdauern hängen individuell mit dem jeweiligen Datenpaket zusammen und können von Datenpaket zu Datenpaket variieren. Die Individualbelegungszeitdauer kann mit der Framelänge eines Datenpakets interpretiert werden. Eine Korrelation der Individualbelegungszeitdauer eines Datenpakets mit dem jeweiligen Untersegment XN, in dem die adressierten Slaveteilnehmer 103 angeordnet sind, besteht nicht.

In Spalte 3 der Tabelle 1 ist für jedes Datenpaket eine Individualteilumlaufzeitdauer angegeben. Die Individualteilumlaufzeitdauer eines Datenpakets betrifft den Zeitraum, den das Datenpaket benötigt, das jeweilige Segment X, insbesondere das jeweilige Untersegment XN, zu durchlaufen, und umfasst somit insbesondere den Zeitraum vom Empfangen des Datenpakets durch die entsprechende Verbindungseinheit 105 des jeweiligen Segments X bis zum Aussenden des Datenpakets an den Masterteilnehmer 101 durch die jeweilige Verbindungseinheit 105.

In der vierten Spalte der Tabelle 1 ist für jedes Datenpaket eine Individualumlaufzeitdauer angegeben. Die Individualumlaufzeitdauer eines Datenpakets betrifft einen Zeitraum vom Aussenden eines ersten Bits eines Datenpakets durch den Masterteilnehmer 101 bis zum Empfangen des letzten Bits des Datenpakets durch den Masterteilnehmer 101. Die Individualumlaufzeitdauer eines Datenpakets beschreibt somit den Zeitraum, der für einen Umlauf des jeweiligen Datenpakets vom Masterteilnehmer 101 zu den adressierten Slaveteilnehmern 103 in einer Datenkommunikationshinrichtung und von den jeweiligen Slaveteilnehmer 103 zurück zum Masterteilnehmer 101 in einer entsprechenden Datenkommunikationsrückrichtung benötigt wird. Aus den in Tabelle 1 angeführten Größen ergibt sich die Individualumlaufzeitdauer für ein beliebiges Datenpaket als die Summe aus der zweifachen Latenz (jeweils einmal für die Datenkommunikationshinrichtung und einmal für die Datenkommunikationsrückrichtung) und der Individualteilumlaufzeitdauer, die jeweils den Zeitraum für einen vollständigen Umlauf innerhalb des entsprechenden Segments beschreibt, abzüglich der Individualbelegungszeitdauer des jeweiligen Datenpakets.

**Tabelle 2**

| Absteigende Sendereihenfolge mit absteigender Individualumlaufzeitdauer und erster Empfangszeitmarkierung | | | | | | |
|---|---|---|---|---|---|---|
| | Latenz | Individual-belegungs-zeitdauer | Individualteilumlaufzeitdauer (Segment) | Individualumlaufzeitdauer | Sende-Offset | Erste Empfangszeitmarkierung |
| DA3 | 4 | 24 | 400 | 432 | 0 | 408 |
| DB2 | 10 | 24 | 380 | 424 | 24 | 424 |
| DA2 | 4 | 20 | 320 | 348 | 48 | 376 |
| DC2 | 16 | 16 | 280 | 328 | 68 | 380 |
| DA1 | 4 | 16 | 280 | 304 | 84 | 372 |
| DC1 | 16 | 12 | 180 | 224 | 100 | 312 |
| DB1 | 10 | 12 | 160 | 192 | 112 | 292 |

In Tabelle 2 sind die Datenpakete aus Tabelle 1 in einer absteigenden Sendereihenfolge angeordnet, wobei die jeweiligen Datenpakete in der absteigenden Sendereihenfolge mit absteigender Individualumlaufzeitdauer angeordnet sind. Das erste Datenpaket der absteigenden Sendereihenfolge, in Tabelle 2 das Datenpaket DA3, weist folglich die längste Individualumlaufzeitdauer auf, während das letzte Datenpaket der absteigenden Sendereihenfolge, in Tabelle 2 das Datenpaket DB1, die kürzeste Individualumlaufzeitdauer aufweist.

Zusätzlich zu den Größen aus Tabelle 1 ist in Tabelle 2 für jedes Datenpaket in der fünften Spalte ein Sende-Offset angegeben. Der Sende-Offset für ein beliebiges Datenpaket entspricht einer Summe der Individualbelegungszeitdauern der in der jeweiligen absteigenden Sendereihenfolge dem entsprechenden Datenpaket vorgeordneten Datenpakete. Der Sende-Offset eines Datenpakets der absteigenden Sendereihenfolge beschreibt damit die Verzögerung im Aussenden des ersten Bits des jeweiligen Datenpakets gegenüber dem Aussenden des ersten Bits des ersten Datenpakets. Das Aussenden des ersten Bits des Datenpakets DA1 ist somit beispielsweise um 84 Zeiteinheiten gegenüber dem Aussenden des ersten Bits des Datenpakets DA3 verzögert.

In der sechsten Spalte der Tabelle 2 ist ferner für jedes Datenpaket eine erste Empfangszeitmarkierung angegeben. Die erste Empfangszeitmarkierung ist ein Zeitpunkt des Empfangens des ersten Bits des jeweiligen Datenpakets durch den Masterteilnehmer 101 und ein Wert der ersten Empfangszeitmarkierung beschreibt den Zeitraum vom Aussenden des ersten Bits des ersten Datenpakets der absteigenden Sendereihenfolge durch den Masterteilnehmer 101 bis zum Empfang des ersten Bits des jeweiligen Datenpakets durch den Masterteilnehmer 101. Mit den in Tabelle 2 angeführten Größen ergibt sich die erste Empfangszeitmarkierung für ein Datenpaket aus einer Summe der Individualumlaufzeitdauer und des Sende-Offsets des jeweiligen Datenpakets abzüglich der Individualbelegungszeitdauer des jeweiligen Datenpakets.

Ein Wert einer ersten Empfangszeitmarkierung eines Datenpakets der absteigenden Sendereihenfolge betrifft einen Zeitraum vom Aussenden eines ersten Bits des ersten Datenpakets der absteigenden Sendereihenfolge durch den Masterteilnehmer 101 bis zum Empfangen eines ersten Bits des jeweiligen Datenpakets durch den Masterteilnehmer 101. Mit den in der Tabelle 2 angeführten Größen ergibt sich eine erste Empfangszeitmarkierung eines Datenpakets aus einer Summe aus der Individualumlaufzeitdauer des Datenpakets und dem Sende-Offset des Datenpakets abzüglich der Individualbelegungszeitdauer des jeweiligen Datenpakets.

**Tabelle 3**

| Ansteigende Sendereihenfolge mit ansteigender erster Empfangszeitmarkierung und korrigierter ersten Empfangszeitmarkierung | | | | | | | |
|---|---|---|---|---|---|---|---|
| | Latenz | Individualbelegungszeitdauer | Individualteilumlaufzeitdauer (Segment) | Individualumlaufzeitdauer | Sende-Offset | Erste Empfangszeitmarkierung | Korrigierte Erste Empfangs-zeitmarkierung |
| DB1 | 10 | 12 | 160 | 192 | 112 | 292 | 292 |
| DC1 | 16 | 12 | 180 | 224 | 100 | 312 | 312 |
| DA1 | 4 | 16 | 280 | 304 | 84 | 372 | 372 |
| DA2 | 4 | 20 | 320 | 348 | 48 | 376 | 388 |
| DC2 | 16 | 16 | 280 | 328 | 68 | 380 | 408 |
| DA3 | 4 | 24 | 400 | 432 | 0 | 408 | 424 |
| DB2 | 10 | 24 | 380 | 424 | 24 | 424 | 448 |

In Tabelle 3 sind die Datenpakete der absteigenden Sendereihenfolge der Tabelle 2 in einer ansteigenden Sendereihenfolge angeordnet. In der ansteigenden Sendereihenfolge der Tabelle 3 sind die Datenpakete mit ansteigender erster Empfangszeitmarkierung angeordnet, sodass das erste Datenpaket der ansteigenden Sendereihenfolge, in Tabelle 3 das Datenpaket DB1, die kleinste erste Empfangszeitmarkierung aufweist, und das letzte Datenpaket der ansteigenden Sendereihenfolge, in Tabelle 3 das Datenpaket DB2, folglich die größte erste Empfangszeitmarkierung aufweist.

In der siebten Spalte der Tabelle 3 ist ferner für jedes Datenpaket eine korrigierte erste Empfangszeitmarkierung angegeben. Gemäß dem Korrekturschritt 213 muss ein Datenpaket, insbesondere auf der Datenkommunikationsrückrichtung, verzögert werden, falls eine Kollision des Datenpakets mit einem vorangehenden Datenpaket zu befürchten ist. Eine derartige Kollision entspricht dem Sachverhalt, dass eine erste Empfangszeitmarkierung eines Datenpakets früher ist als eine zweite Empfangszeitmarkierung eines dem Datenpaket vorgeordneten Datenpakets. Eine zweite Empfangszeitmarkierung des Datenpakets entspricht einer Summe aus der ersten Empfangszeitmarkierung des jeweiligen Datenpakets und der Individualbelegungszeitdauer des Datenpakets.

In Tabelle 3 sind die ersten drei Datenpakete DB1, DC1 und DA1 nicht von einer Kollision mit den jeweils vorangehenden Datenpaketen betroffen. Die erste Empfangszeitmarkierung des Datenpakets DC1 ist später als die erste Empfangszeitmarkierung des Datenpakets DB1 plus der Individualbelegungszeitdauer des Datenpakets DB1. Die erste Empfangszeitmarkierung des Datenpakets DA1 ist ebenfalls später als die erste Empfangszeitmarkierung des Datenpakets DC1 plus der Individualbelegungszeitdauer des Datenpakets DC1. Für die ersten drei Datenpakete DB1, DC1 und DA1 besteht folglich keine Veranlassung, eine Verzögerung zu bewirken und eine von der ersten Empfangszeitmarkierung abweichende korrigierte erste Empfangszeitmarkierung zu bestimmen.

Die erste Empfangszeitmarkierung des vierten Datenpakets DA2 hingegen ist früher als eine Summe aus der ersten Empfangszeitmarkierung des Datenpakets DA1 und der Individualbelegungszeitdauer des Datenpakets DA1. Zwischen den Datenpaketen DA1 und DA2 wäre somit eine Kollision zu befürchten und es besteht daher Veranlassung, das vierte Datenpaket DA2 zu verzögern. Der Masterteilnehmer 101 ermittelt somit im Korrekturschritt 213 für das Datenpaket DA2 eine korrigierte erste Empfangszeitmarkierung. Die korrigierte erste Empfangszeitmarkierung für das Datenpaket DA2 entspricht einer Summe aus der ersten Empfangszeitmarkierung des Datenpakets DA1 und der Individualbelegungszeitdauer des Datenpakets DA1, sprich der zweiten Empfangszeitmarkierung des Datenpakets DA1.

Die Verzögerung des Datenpakets DA2 und die Bestimmung der korrigierten ersten Empfangszeitmarkierung des Datenpakets DA2 führt zu einer Kollision der Datenpakete DA2 und DC2, indem die erste Empfangszeitmarkierung des fünften Datenpakets DC2 früher ist als eine Summe aus der korrigierten ersten Empfangszeitmarkierung des Datenpakets DA2 und der Individualbelegungszeitdauer des Datenpakets DA2, sprich der korrigierten zweiten Empfangszeitmarkierung des Datenpakets DA2. Das fünfte Datenpaket DC2 muss somit ebenfalls verzögert werden und es muss eine korrigierte erste Empfangszeitmarkierung für das Datenpaket DC2 bestimmt werden. Die korrigierte erste Empfangszeitmarkierung für das Datenpaket DC2 entspricht einer Summe aus der korrigierten ersten Empfangszeitmarkierung des Datenpakets DA2 und der Individualbelegungszeitdauer des Datenpakets DA2, sprich der korrigierten zweiten Empfangszeitmarkierung des Datenpakets DA2.

Wie aus der Tabelle 3 zu entnehmen ist, müssen die sechsten und siebten Datenpakete DA3, DB2 ebenfalls verzögert werden, da eine Kollision zwischen dem Datenpaket DC2 und dem Datenpaket DA3 und eine Kollision zwischen dem Datenpaket DA3 und dem Datenpaket DB2 zu erwarten ist. Die entsprechenden korrigierten ersten Empfangszeitmarkierungen des Datenpakets DA3 und des Datenpakets DB2 werden analog zu den oben beschriebenen Schritten bestimmt, sodass eine korrigierte erste Empfangszeitmarkierung des Datenpakets DA3 einer Summe der korrigierten ersten Empfangszeitmarkierung des Datenpakets DC2 und der Individualbelegungszeitdauer des Datenpakets DC2, sprich einer korrigierten zweiten Empfangszeitmarkierung des Datenpakets DC2, entspricht und eine korrigierte erste Empfangszeitmarkierung des Datenpakets DB2 einer Summe aus einer korrigierten ersten Empfangszeitmarkierung des Datenpakets DA3 und einer Individualbelegungszeitdauer des Datenpakets DA3, sprich einer korrigierten zweiten Empfangszeitmarkierung des Datenpakets DA3 entspricht.

Die Verzögerungen der vierten bis siebten Datenpakete der ansteigenden Sendereihenfolge führen zu einer Verlängerung der Gesamtbelegungszeitdauer der ansteigenden Sendereihenfolge. Die Gesamtbelegungszeitdauer der ansteigenden Sendereihenfolge entspricht einer Summe aus der korrigierten ersten Empfangszeitmarkierung des letzten Datenpakets DB2 und der Individualbelegungszeitdauer des letzten Datenpakets DB2.

Fig. 5 zeigt ein Flussdiagramm des Verfahrens 200 zur Datenkommunikation zwischen Teilnehmern in einem Automatisierungsnetzwerk 100 gemäß einer weiteren Ausführungsform.

Sofern nicht anderslautend angeführt, umfasst das Verfahren 200 gemäß der Ausführungsform in Fig. 5 die zu Fig. 2, Fig. 3 oder Fig. 4 beschriebenen Verfahrensschritte.

Gemäß der Ausführungsform in Fig. 5 umfasst der Optimierungsschritt 203 die Verfahrensschritte:
Vertauschen der Reihenfolge eines i-ten Datenpakets und eines auf das i-te Datenpaket folgenden i+1-ten Datenpakets in einer m-ten Sendereihenfolge der n Datenpakete mit einer m-ten Gesamtbelegungszeitdauer der m-ten Sendereihenfolge und Bilden einer m+1-ten Sendereihenfolge mit einer m+1-ten Gesamtbelegungszeitdauer, wobei in der m+1-ten Sendereihenfolge die Reihenfolge des i-ten Datenpakets und des i+1-ten Datenpakets vertauscht ist, und wobei gilt 1≤i≤n-1 und n≥3 mit i, k, m, n Elemente der Natürlichen Zahlen, in einem ersten Vertauschungsschritt 219,
Überprüfen, ob die m+1-te Gesamtbelegungszeitdauer kürzer ist als die m-te Gesamtbelegungszeitdauer in einem ersten Überprüfungsschritt 221;
falls die m+1-te Gesamtbelegungszeitdauer nicht kürzer ist als die m-te Gesamtbelegungszeitdauer:
   Zurückvertauschen der Reihenfolge des i-ten Datenpakets und des i+1-ten Datenpakets und Wiederherstellen der m-ten Sendereihenfolge in einem ersten Zurückvertauschungsschritt 223;
   Überprüfen, ob gilt: i=n-1 in einem zweiten Überprüfungsschritt 225;
   falls gilt: i=n-1,
   Aussenden der n Datenpakete auf Basis der m-ten Sendereihenfolge in dem Sendeschritt 205;
   falls nicht gilt: i=n-1,
   Setzen von i=i+1 in einem ersten Setzschritt 227;
   Fortfahren mit dem ersten Vertauschungsschritt 219 mit der m-ten Sendereihenfolge; falls die m+1-te Gesamtbelegungszeitdauer kürzer ist als die m-te Gesamtbelegungszeitdauer,
   Beibehalten der Vertauschung der Reihenfolge des i-ten Datenpakets und des i+1-ten Datenpakets in der m+1-ten Sendereihenfolge und Setzen von k=i in der m+1-ten Sendereihenfolge in einem zweiten Setzschritt 229,
   Überprüfen ob gilt: k<2 in der m+1-ten Sendereihenfolge, in einem dritten Überprüfungsschritt 231;
   falls gilt: k<2,
   Fortfahren mit dem zweiten Überprüfungsschritt 225 mit der m+1-ten Sendereihenfolge, falls nicht gilt k<2:
      Vertauschen der Reihenfolge des k-ten Datenpakets und des in der m+1-ten Sendereihenfolge dem k-ten Datenpaket vorstehenden k-1-ten Datenpakets und Bestimmen einer m+2-ten Sendereihenfolge mit einer m+2-ten Gesamtbelegungszeitdauer, wobei in der m+2-ten Sendereihenfolge die Reihenfolge des k-ten Datenpakets und des k-1-ten Datenpakets vertauscht ist, in einem zweiten Vertauschungsschritt 233,
      Überprüfen ob die m+2-te Gesamtbelegungszeitdauer kürzer ist als die m+1-te Gesamtbelegungszeitdauer der m+1-ten Sendereihenfolge in einem vierten Überprüfungsschritt 235,
      falls die m+2-te Gesamtbelegungszeitdauer nicht kürzer ist als die m+1-te Gesamtbelegungszeitdauer:
         Zurückvertauschen der Reihenfolge des k-ten Datenpakets und des k-1-ten Datenpakets und Wiederherstellen der m+1-ten Sendereihenfolge in einem zweiten Zurückvertauschungsschritt 237,
         Fortfahren mit dem zweiten Überprüfungsschritt 225 mit der m+2-ten Sendereihenfolge, falls die m+2-te Gesamtbelegungszeitdauer kürzer ist als die m+1-te Gesamtbelegungszeitdauer:
            Beibehalten der Vertauschung der Reihenfolge des k-ten Datenpakets und des k-1-ten Datenpakets in der m+1-ten Sendereihenfolge und Setzen von k=k-1 und m=m+2 in einem dritten Setzschritt 239,
            Fortfahren mit dem dritten Überprüfungsschritt 231 mit der m-ten Sendereihenfolge.

Zur Optimierung einer Sendereihenfolge, beispielsweise der ansteigenden Sendereihenfolge der Tabelle 3, führt der Masterteilnehmer 101 in dem Optimierungsschritt 203 ein Optimierungsverfahren durch, um ausgehend von beispielsweise der ansteigenden Sendereihenfolge eine optimierte Sendereihenfolge zu bestimmen, die eine geringere Gesamtbelegungszeitdauer aufweist als die ansteigende Sendereihenfolge.

Hierzu vertauscht der Masterteilnehmer 101 in einem ersten Vertauschungsschritt 219 die Reihenfolge eines i-ten Datenpakets und eines auf das i-te Datenpaket folgenden i+1-ten Datenpakets in einer m-1-ten Sendereihenfolge. Für eine Sendereihenfolge mit n Datenpaketen kann das i-te Datenpaket ein beliebiges Datenpaket mit i≥1 und i≤n-1 sein, wobei gilt: n≥3. Die m-te Sendereihenfolge kann eine beliebige Ausgangssendereihenfolge sein. Beispielsweise kann die m-te Sendereihenfolge die ansteigende Sendereihenfolge sein, in der die n Datenpakete mit ansteigender erster Empfangszeitmarkierung angeordnet sind. Gemäß einer Ausführungsform kann das i-te Datenpaket ein erstes Datenpaket einer Sendereihenfolge, insbesondere das erste Datenpaket der ansteigenden Sendereihenfolge, sein.

Durch die Vertauschung der Reihenfolge des i-ten Datenpakets und des i+1-ten Datenpakets in der m-ten Sendereihenfolge wird eine m+1-te Sendereihenfolge gebildet, in der die Reihenfolge des i-ten Datenpakets und des i+1-ten Datenpakets gegenüber der m-ten Sendereihenfolge vertauscht ist. Die m-te Sendereihenfolge weist eine m-te Gesamtbelegungszeitdauer auf und die m+1-te Sendereihenfolge weist eine m+1-te Gesamtbelegungszeitdauer auf. Die m-te Gesamtbelegungszeitdauer der m-ten Sendereihenfolge und die m+1-te Gesamtbelegungszeitdauer der m+1-ten Sendereihenfolge können voneinander verschieden sein. Für eine detaillierte Beschreibung der Berechnung der Gesamtbelegungszeitdauern beziehungsweise der Änderungen der Gesamtbelegungszeitdauer durch Vertauschung der Reihenfolge von Datenpaketen wird auf die Beschreibung zu den Tabellen 4 und 5 verwiesen.

In einem ersten Überprüfungsschritt 221 überprüft der Masterteilnehmer 101, ob eine m+1-te Gesamtbelegungszeitdauer der m+1-ten Sendereihenfolge kürzer ist als die m-te Gesamtbelegungszeitdauer der m-ten Sendereihenfolge.

Ist die m+1-te Gesamtbelegungszeitdauer nicht kürzer als die m-te Gesamtbelegungszeitdauer, tauscht der Masterteilnehmer 101 die Reihenfolgen des i-ten Datenpakets und des i+1-ten Datenpakets zurück und stellt die m-te Sendereihenfolge in einem ersten Zurückvertauschungsschritt 223 wieder her.

In einem zweiten Überprüfungsschritt 225 überprüft der Masterteilnehmer 101, ob das zuvor vertauschte i-te Datenpaket in der wiederhergestellten m-ten Sendereihenfolge das jeweils vorletzte Datenpaket der m-ten Sendereihenfolge ist, sprich ob gilt: i=n-1.

Wenn das i-te Datenpaket das vorletzte Datenpaket der m-ten Sendereihenfolge ist und folglich i=n-1 gilt, ist das Optimierungsverfahren beendet und der Masterteilnehmer 101 sendet die n Datenpakete auf Basis der m-ten Sendereihenfolge, sprich: der Ausgangssendereihenfolge, beispielsweise der ansteigenden Sendereihenfolge, an die Slaveteilnehmer 103 in dem Sendeschritt 205 aus.

Ist das i-te Datenpaket nicht das vorletzte Datenpaket der m-ten Reihenfolge und gilt folglich nicht: i=n-1, setzt der Masterteilnehmer 101 in einem ersten Setzschritt 227 in der m-ten Sendereihenfolge i=i+1. Durch das Setzen von i=i+1 wird für die nächste paarweise Vertauschung in der Sendereihenfolge eine Position weiter in Richtung des Endes der Sendereihenfolge vorgerückt, sodass in folgenden Vertauschungsschritten die auf das i-te Datenpaket des ersten Vertauschungsschritts 219 folgenden Datenpakete miteinander vertauscht werden. Galt in dem ersten Vertauschungsschritt 219 beispielsweise i=1 und wurden folglich in dem ersten Vertauschungsschritt 219 die Reihenfolge des ersten und zweiten Datenpakets miteinander vertauscht, so bedeutet das Setzen von i=i+1, sprich: i=2, dass in einem folgenden Vertauschungsschritt die Reihenfolge des zweiten und dritten Datenpakets miteinander vertauscht werden.

Das Verfahren 200 wird durch die Wiederholung des ersten Vertauschungsschritts 219 in Bezug auf das neu gesetzte i-te Datenpaket und das neu gesetzte i+1-te Datenpaket fortgesetzt. Durch das weitere Setzen von i=i+1 und das entsprechende Vertauschen von i-ten Datenpaketen und i+1-ten Datenpaketen wird erreicht, dass die paarweisen Vertauschungen von Datenpaketen in jedem erneuten Durchführen des ersten Vertauschungsschritts 219 und einem vorangegangenen ersten Setzschritt 227 jeweils um eine Stelle in Richtung des Endes der m-ten Sendereihenfolge, sprich einer Ausgangssendereihenfolge, beispielsweise der ansteigenden Sendereihenfolge, weiterrücken. Somit können in n-1 Schritten alle n Datenpakete der Sendereihenfolge jeweils einmal mit dem direkt nachfolgenden Datenpaket und einmal mit dem direkt voranstehenden Datenpaket vertauscht werden.

Falls in dem ersten Überprüfungsschritt 221 festgestellt wird, dass die m+1-te Gesamtbelegungszeitdauer kürzer als die m-te Gesamtbelegungszeitdauer ist, wird die Vertauschung der Reihenfolge des i-ten Datenpakets und des i+1-ten Datenpakets in der m+1-ten Sendereihenfolge beibehalten und in einem zweiten Setzschritt 229 in der m+1-ten Reihenfolge wird k=i gesetzt.

Durch die Umbenennung des i-ten Datenpakets in das k-te Datenpaket ist indiziert, dass im Folgenden Verfahrensschritt die Vertauschung der Datenpakete in die entgegengesetzte Richtung fortgesetzt wird. Bei der Verwendung des Indizes i für das i-te Datenpaket und das i+1-te Datenpaket ist indiziert, dass die Vertauschungsrichtung vom Anfang der Sendereihenfolge in Richtung des Endes der Sendereihenfolge weist. So werden nacheinander aufeinanderfolgende Datenpakete vertauscht bis das Ende der Sendereihenfolge erreicht.

Bei der Verwendung des Indizes k für das k-te Datenpaket und das k-1-te Datenpaket ist indiziert, dass die Vertauschung ausgehend vom k=i-ten Datenpaket in Richtung des Anfangs der Sendereihenfolge fortgesetzt wird.

In einem dritten Überprüfungsschritt 231 überprüft der Masterteilnehmer 101, ob das k-te Datenpaket das erste Datenpaket der m+1-ten Sendereihenfolge ist, sprich ob gilt: k<2.

Falls das k-te Datenpaket das erste Datenpaket der m+1-ten Sendereihenfolge ist, wird mit dem zweiten Überprüfungsschritt 225 in Bezug auf die m+1-te Sendereihenfolge fortgefahren.

Falls in dem dritten Überprüfungsschritt 231 ermittelt wird, dass das k-te Datenpaket nicht das erste Datenpaket der m+1-ten Sendereihenfolge ist und folglich nicht gilt: k<2, so wird in einem zweiten Vertauschungsschritt 233 die Reihenfolge des k-ten Datenpakets und des in der m+1-ten Sendereihenfolge dem k-ten Datenpaket vorstehenden k-1-ten Datenpakets vertauscht und eine m+2-te Sendereihenfolge mit einer m+2-ten Gesamtbelegungszeitdauer bestimmt. In der m+2-ten Sendereihenfolge ist die Reihenfolge des k-ten Datenpakets und des k-1-ten Datenpakets im Vergleich zur m+1-ten Sendereihenfolge vertauscht.

In einem vierten Überprüfungsschritt 235 wird überprüft, ob die m+2-te Gesamtbelegungszeitdauer der m+2-ten Sendereihenfolge kürzer ist als die m+1-te Gesamtbelegungszeitdauer der m+1-ten Sendereihenfolge.

Wird im vierten Überprüfungsschritt 235 ermittelt, dass die m+2-te Gesamtbelegungszeitdauer nicht kürzer ist als die m+1-te Gesamtbelegungszeitdauer, wird die Reihenfolge des k-ten Datenpakets und des k-1-ten Datenpakets zurückvertauscht und die m+1-te Sendereihenfolge in einem zweiten Zurückvertauschungsschritt 237 wiederhergestellt.

Mit der m+1-ten Sendereihenfolge wird das Verfahren mit dem zweiten Überprüfungsschritt 225 fortgesetzt.

Wird in dem vierten Überprüfungsschritt 235 ermittelt, dass die m+2-te Gesamtbelegungszeitdauer kürzer ist als die m+1-te Gesamtbelegungszeitdauer, wird die Vertauschung der Reihenfolge des k-ten Datenpakets und des k-1-ten Datenpakets in der m+2-ten Sendereihenfolge beibehalten und in einem dritten Setzschritt 239 in der m+2-ten Sendereihenfolge k=k-1 und m=m+2 gesetzt. Durch das Setzen von k=k-1 wird erreicht, dass in einem folgenden zweiten Vertauschungsschritt 233 die Reihenfolge der zwei in der m-ten Sendereihenfolge vor dem k-ten Datenpaket angeordneten Datenpakete miteinander vertauscht werden, falls in dem folgenden dritten Überprüfungsschritt 231 festgestellt wird, dass nicht gilt k<2

Das Verfahren wird mit dem dritten Überprüfungsschritt 231 mit der m-ten Sendereihenfolge und den neu gesetzten k-ten und k-1-ten Datenpaketen fortgesetzt. Galt in dem zweiten Vertauschungsschritt 233 beispielsweise k=5, wurde in dem zweiten Vertauschungsschritt 233 also das fünfte Datenpaket und das vierte Datenpaket der entsprechenden Sendereihenfolge vertauscht, so gilt durch das Setzen von k=k-1 in der m-ten Sendereihenfolge k=4. In dem zweiten Vertauschungsschritt 233 wird folglich das vierte Datenpaket mit dem dritten Datenpaket der m-ten Sendereihenfolge vertauscht und somit eine m+2-te Sendereihenfolge erstellt. Durch das Setzen von k=k-1 und den folgenden Vertauschungen wird somit erreicht, dass ausgehend von dem k-ten Datenpaket paarweise Vertauschungen in Richtung des Anfangs der jeweiligen Sendereihenfolge bewirkt werden.

Durch das beschriebene Optimierungsverfahren werden somit vorzugsweise ausgehend von dem Anfang einer Sendereihenfolge paarweise Vertauschungen von direkt aufeinanderfolgenden Datenpaketen in Richtung des Endes der Sendereihenfolge durchgeführt, bis eine Vertauschung zweier aufeinanderfolgender Datenpakete zu einer kürzeren Gesamtbelegungszeitdauer führt.

Bei kürzerer Gesamtbelegungszeitdauer wird die Vertauschung der zwei Datenpakete beibehalten und wiederum ausgehend von den vertauschten Datenpaketen paarweise Vertauschungen in Richtung des Anfangs der jeweiligen Sendereihenfolge ausgeführt. Führen diese Vertauschungen nicht zu einer verkürzten Sendereihenfolge, werden wiederum paarweise Vertauschungen ausgehend von den vertauschten Datenpaketen, deren Vertauschungen zu einer verkürzten Sendereihenfolge geführt haben, in Richtung des Endes der Sendereihenfolge fortgesetzt.

Bei jeder Vertauschung von Datenpaketen in Richtung des Endes der Sendereihenfolge, bei der eine verkürzte Gesamtbelegungszeitdauer erreicht wird, werden Vertauschungen ausgehend von diesen beiden vertauschten Datenpaketen in Richtung des Anfangs der Sendereihenfolge durchgeführt, bis keine Verbesserung der Gesamtbelegungszeitdauer erzielt wird oder der Anfang der Sendereihenfolge erreicht ist. Daraufhin wird mit paarweisen Vertauschungen in Richtung des Endes der Sendereihenfolge fortgefahren. Das Optimierungsverfahren ist beendet, sobald das Ende der Sendereihenfolge erreicht ist. Die Sendereihenfolge mit der jeweils kürzesten Gesamtbelegungszeitdauer wird nach Abschluss des Optimierungsverfahrens zum Aussenden der n Datenpakete durch den Masterteilnehmer 101 verwendet.

Anhand der Tabellen 4 und 5, die eine Fortsetzung der Tabellen 1 bis 3 sind, wird eine Vertauschung von Datenpaketen gemäß dem oben beschriebenen Optimierungsverfahren und eine Bestimmung der Gesamtbelegungszeitdauer der durch die Vertauschungen erreichten Sendereihenfolge illustriert.

**Tabelle 4**

| Ansteigende Sendereihenfolge mit ansteigender erster Empfangszeitmarkierung, korrigierter erste Empfangszeitmarkierung und paarweisen Vertauschung | | | | | | | |
|---|---|---|---|---|---|---|---|
| | Latenz | Individual-belegungszeitdauer | Individualteil-umlaufzeitdauer (Segment) | Individualumlaufzeitdauer | Sende-Offset | Erste Empfangszeitdauer | Korrigierte Erste Empfangs-zeitdauer |
| DB1 | 10 | 12 | 160 | 192 | 112 | 292 | 292 |
| DC1 | 16 | 12 | 180 | 224 | 100 | 312 | 312 |
| DA1 | 4 | 16 | 280 | 304 | 84 | 372 | 372 |
| DC2 | 16 | 16 | 280 | 328 | 48 | 360 | 360 |
| DA2 | 4 | 20 | 320 | 348 | 64 | 392 | 392 |
| DA3 | 4 | 24 | 400 | 432 | 0 | 408 | 424 |
| DB2 | 10 | 24 | 380 | 424 | 24 | 424 | 448 |

Die Tabelle 4 basiert auf der Tabelle 3 und zeigt die ansteigende Sendereihenfolge der sieben Datenpakete DA1 bis DC2. Gegenüber der Tabelle 3 ist in Tabelle 4 die Reihenfolge des vierten Datenpakets DA2 und des fünften Datenpakets DC2 miteinander vertauscht. Durch die Vertauschung des Datenpakets DC2 an die Stelle des Datenpakets DA2 übernimmt das Datenpaket DC2 den Sende-Offset des Datenpakets DA2. Nach der Vertauschung weist das Datenpaket DC2 somit einen Sende-Offset von 48 Zeiteinheiten auf. Gemäß der zu Tabelle 2 angeführten Berechnungsart der ersten Empfangszeitmarkierung, die einer Summe aus der Individualumlaufzeitdauer und dem Sende-Offset abzüglich der Individualbelegungszeitdauer eines Datenpakets entspricht, verringert sich durch die Vertauschung die erste Empfangszeitmarkierung des Datenpakets DC2 von 380 Zeiteinheiten in Tabelle 3 zu 360 Zeiteinheiten in Tabelle 4.

Durch die Vertauschung der Reihenfolge des Datenpakets DC2 mit dem Datenpaket DA2 wird dem Datenpaket DA2 ebenfalls ein neuer Sende-Offset zugeordnet. Der Sende-Offset des Datenpakets DA2 entspricht nach der Vertauschung mit dem Datenpaket DC2 jedoch nicht dem Sende-Offset des Datenpakets DC2 vor der Vertauschung. Da der Sende-Offset eines Datenpakets der Summe der Individualbelegungszeitdauern der dem jeweiligen Datenpaket vorgeordneten Datenpakete entspricht, und durch die Vertauschung des Datenpakets DA2 mit dem Datenpaket DC2, das sich nach Vertauschung vor dem Datenpaket DA2 befindet, dieses jedoch eine um vier Zeiteinheiten kürzere Individualbelegungszeitdauer aufweist als das Datenpaket DA2, verringert sich der Sende-Offset des Datenpakets DC2 nach Vertauschung gegenüber dem Sende-Offset des Datenpakets DC2 vor der Vertauschung ebenfalls um vier Zeiteinheiten. Gemäß der oben genannten Berechnungsart ergibt sich nach der Vertauschung für das Datenpaket DA2 eine von der in Tabelle 3 angeführte abweichende erste Empfangszeitmarkierung.

**Tabelle 5**

| Ansteigende Sendereihenfolge mit ansteigender erster Empfangszeitmarkierung, korrigierter erste Empfangszeitmarkierung und paarweisen Vertauschung | | | | | | | |
|---|---|---|---|---|---|---|---|
| | Latenz | Individualbelegungszeitdauer | Individual-teilumlaufzeitdauer (Segment) | Individualumlaufzeitdauer | Sende-Offset | Erste Empfangszeitdauer | Korrigierte Erste Empfangszeitdauer |
| DB1 | 10 | 12 | 160 | 192 | 112 | 292 | 292 |
| DC1 | 16 | 12 | 180 | 224 | 100 | 312 | 312 |
| DC2 | 16 | 16 | 280 | 328 | 48 | 360 | 360 |
| DA1 | 4 | 16 | 280 | 304 | 84 | 372 | 376 |
| DA2 | 4 | 20 | 320 | 348 | 64 | 392 | 392 |
| DA3 | 4 | 24 | 400 | 432 | 0 | 408 | 412 |
| DB2 | 10 | 24 | 380 | 424 | 24 | 424 | 436 |

Tabelle 5 basiert auf Tabelle 4 und geht aus dieser durch eine Vertauschung der Datenpakete DA1 und DC2 hervor.

Die durch die Vertauschung des Datenpakets DC2 mit dem Datenpaket DA2 resultierende neue erste Empfangszeitmarkierung des Datenpakets DC2 ist kürzer als die erste Empfangszeitmarkierung des in Tabelle 4 vor dem Datenpaket DC2 angeordneten Datenpakets DA1. Zur Einhaltung der ansteigenden Sendereihenfolge innerhalb der Tabelle 4, bei der die Datenpakete ausgehend vom Datenpaket DB1 mit ansteigender erster Empfangszeitmarkierung angeordnet sind, ist in Tabelle 5 gegenüber Tabelle 4 die Reihenfolge der Datenpakete DC2 und DA1 vertauscht.

Da nach der Vertauschung der Datenpakete DC2 und DA1 die erste Empfangszeitmarkierung des Datenpakets DA1 früher ist als die zweite Empfangszeitmarkierung des Datenpakets DC2, die einer Summe der ersten Empfangszeitmarkierung des Datenpakets DC2 und der Individualbelegungszeitdauer des Datenpakets DC2 entspricht, muss das Datenpaket DA1 einer Verzögerung unterworfen werden, um eine Kollision der Datenpakete DA1 und DC2 zu vermeiden. Für das Datenpaket DA1 ist in Tabelle 5 somit eine korrigierte erste Empfangszeitmarkierung bestimmt worden, die einer Summe aus der ersten Empfangszeitmarkierung des Datenpakets DC2 und der Individualbelegungszeitdauer des Datenpakets DC2 entspricht. Da eine Kollision zwischen dem Datenpaket DA1 und dem Datenpaket DA2 nicht zu befürchten ist, entspricht die korrigierte erste Empfangszeitmarkierung des Datenpakets DA2 der ersten Empfangszeitmarkierung des Datenpakets DA2. Aufgrund entsprechender Kollisionen zwischen dem Datenpaket DA2 und dem Datenpaket DA3 beziehungsweise dem Datenpaket DA3 und dem Datenpaket DB2 sind für das Datenpaket DA3 und das Datenpaket DB2 gemäß dem oben beschriebenen Verfahren korrigierte erste Empfangszeitmarkierungen bestimmt.

Für die in Tabelle 5 angeführte ansteigende Sendereihenfolge mit den oben beschriebenen Vertauschungen der Reihenfolgen der Datenpakete DA1, DC2 und DA2 ergibt sich eine Gesamtbelegungszeitdauer aus der korrigierten ersten Empfangszeitmarkierung des zuletzt empfangenen Datenpakets DB2 und der entsprechenden Individualbelegungszeitdauer des Datenpakets DB2. Die Gesamtbelegungszeitdauer der in Tabelle 5 angeführten Sendereihenfolge entspricht dabei 460 Zeiteinheiten. Im Vergleich hierzu weist die Sendereihenfolge der Tabelle 3 eine Gesamtbelegungszeitdauer, die sich ebenfalls aus der korrigierten ersten Empfangszeitmarkierung des zuletzt empfangenen Datenpakets DB2 und der Individualbelegungszeitdauer des Datenpakets DB2 ergibt, von 472 Zeiteinheiten auf. Hiermit ist illustriert, dass durch die Vertauschung der oben genannten Datenpakete in Tabellen 4 und 5 eine Verringerung der Gesamtbelegungszeitdauer der jeweiligen Sendereihenfolge der sieben Datenpakete erzielt werden kann.

Das oben beschriebene Verfahren kann mit den Datenpaketen der Tabelle 5 fortgesetzt werden, bis eine optimierte Sendereihenfolge mit minimaler Gesamtbelegungszeitdauer erzielt wird. Die Verdeutlichung der einzelnen Verfahrensschritte anhand der Tabellen 1 bis 5 dient lediglich illustrativen Zwecken. Da anhand der Vertauschungen der Datenpakete in den Tabellen 4 und 5 die Charakteristiken der einzelnen Vertauschungsschritte und der Bestimmung einer Gesamtbelegungszeitdauer einer Sendereihenfolge verdeutlich werden konnten, wird auf eine beispielbasierte weitere Illustration zusätzlicher Vertauschungsschritte verzichtet.

### Bezugszeichenliste

- 100: Automatisierungsnetzwerk
- 101: Masterteilnehmer
- 103: Slaveteilnehmer
- X: Segment
- XN: Untersegment
- A: erstes Segment
- A1: erstes Untersegment
- A2: zweites Untersegment
- A3: drittes Untersegment
- B: zweites Segment
- B1: viertes Untersegment
- B2: fünftes Untersegment
- C: drittes Segment
- C1: sechstes Untersegment
- C2: siebtes Untersegment
- 105: Verbindungseinheit
- 107: erste Verbindungseinheit
- 109: zweite Verbindungseinheit
- 111: dritte Verbindungseinheit
- 113: Steuerungseinheit
- 115: Datenleitungsnetz
- 117: Datenkommunikationshinrichtung
- 119: Datenkommunikationsrückrichtung

- 200: Verfahren zur Datenkommunikation
- 201: erster Anordnungsschritt
- 203: Optimierungsschritt
- 205: Sendeschritt
- 207: zweiter Anordnungsschritt
- 209: erster Bestimmungsschritt
- 211: dritter Anordnungsschritt
- 213: Korrekturschritt
- 215: zweiter Bestimmungsschritt
- 217: vierter Anordnungsschritt
- 219: erster Vertauschungsschritt
- 221: erster Überprüfungsschritt
- 223: erster Zurückvertauschungsschritt
- 225: zweiter Überprüfungsschritt
- 227: erster Setzschritt
- 229: zweiter Setzschritt
- 231: dritter Überprüfungsschritt
- 233: zweiter Vertauschungsschritt
- 235: vierter Überprüfungsschritt
- 237: zweiter Zurückvertauschungsschritt
- 239: dritter Setzschritt

## Patentansprüche

1. Verfahren (200) zur echtzeitfähigen Datenkommunikation zwischen Teilnehmern in einem Automatisierungsnetzwerk (100), wobei das Automatisierungsnetzwerk (100) einen Masterteilnehmer (101), mehrere Slaveteilnehmer (103) und wenigstens eine Verbindungseinheit (105) umfasst, die über ein Datenleitungsnetz (115) miteinander verbunden sind, wobei das Datenleitungsnetz (115) als ein Feldbussystem ausgebildet ist, wobei der Masterteilnehmer (101) ausgebildet ist, an die Slaveteilnehmer (103) zur Datenkommunikation Datenpakete in einem Umlauf auszusenden, in dem die Datenpakete vom Masterteilnehmer (101) an die Slaveteilnehmer (103) ausgesendet und Datenpakete von den Slaveteilnehmern (103) an den Masterteilnehmer (101) gesendet werden, und wobei die Verbindungseinheit (105) ausgebildet ist, an die Slaveteilnehmer (103) adressierte Datenpakete weiterzuleiten und die Datenpakete an den Masterteilnehmer (101) zurückzuleiten, wobei das Verfahren (200) die Verfahrensschritte umfasst:
Anordnen durch den Masterteilnehmer (101) von n auszusendenden Datenpaketen in einer Sendereihenfolge mit einer Gesamtbelegungszeitdauer der Sendereihenfolge in einem ersten Anordnungsschritt (201), wobei die Gesamtbelegungszeitdauer einen Zeitraum vom Aussenden durch den Masterteilnehmer (101) eines ersten Bits eines zuerst ausgesendeten Datenpakets bis zu einem Empfangen durch den Masterteilnehmer eines letzten Bits eines zuletzt empfangenen Datenpakets umfasst,
Durchführen durch den Masterteilnehmer (101) eines Optimierungsverfahrens zum Bestimmen einer optimierten Sendereihenfolge mit minimaler Gesamtbelegungszeitdauer in einem Optimierungsschritt (203), wobei das Optimierungsverfahren eine endliche Anzahl von maximal n*(n-1)/2 paarweisen Vertauschungen von Reihenfolgen von in der Sendereihenfolge aufeinanderfolgenden n Datenpaketen und Bestimmungen der Gesamtbelegungszeitdauern der durch die Vertauschungen erzeugten Sendereihenfolgen umfasst, und
Aussenden durch den Masterteilnehmer (101) der n Datenpakete in der optimierten Sendereihenfolge an die Slaveteilnehmer (103) in einem Sendeschritt (205).

2. Verfahren (200) nach Anspruch 1, wobei der erste Anordnungsschritt (201) umfasst:
Anordnen der n Datenpakete in einer absteigenden Sendereihenfolge mit absteigenden Individualumlaufzeitdauern der n Datenpakete in einem zweiten Anordnungsschritt (207), wobei in der absteigenden Sendereihenfolge ein Datenpaket mit längster Individualumlaufzeitdauer an erster und ein Datenpaket mit kürzester Individualumlaufzeitdauer an letzter Position der Sendereihenfolge angeordnet ist, und wobei die Individualumlaufzeitdauer eines jeden Datenpakets einen Zeitraum vom Aussenden durch den Masterteilnehmer (101) eines ersten Bits des Datenpakets bis zu einem Empfangen durch den Masterteilnehmer (101) eines letzten Bits des Datenpakets umfasst.

3. Verfahren (200) nach Anspruch 2, wobei der erste Anordnungsschritt (201) ferner umfasst:
Bestimmen einer ersten Empfangszeitmarkierung für jedes der n Datenpakete der absteigenden Sendereihenfolge in einem ersten Bestimmungsschritt (209), wobei die erste Empfangszeitmarkierung eines beliebigen Datenpakets einer Sendereihenfolge ein Zeitpunkt eines Empfangens des ersten Bits des jeweiligen Datenpakets ist, und wobei ein Wert der ersten Empfangszeitmarkierung einen Zeitraum vom Aussenden durch den Masterteilnehmer (101) des ersten Bits des ersten Datenpakets der Sendereihenfolge bis zum Empfangen durch den Masterteilnehmer (101) des ersten Bits des jeweiligen Datenpakets der Sendereihenfolge umfasst, und Bestimmen einer zweiten Empfangszeitmarkierung für jedes der n Datenpakete der absteigenden Sendereihenfolge, wobei die zweite Empfangszeitmarkierung einer Summe aus dem Wert der ersten Empfangszeitmarkierung und einer Individualbelegungszeitdauer des Datenpakets entspricht, wobei die Individualbelegungszeitdauer eines Datenpakets einen Zeitraum vom Aussenden eines ersten Bits des Datenpakets zu einer ersten Aussendezeitmarkierung bis zum Aussenden eines letzten Bits des Datenpakets zu einer zweiten Aussendezeitmarkierung umfasst, wobei die erste Aussendezeitmarkierung ein Zeitpunkt des Aussendens des ersten Bits des jeweiligen Datenpakets ist, und wobei die zweite Aussendezeitmarkierung ein Zeitpunkt des Aussendens des letzten Bits des Datenpakets ist;
Anordnen der n Datenpakete der absteigenden Sendereihenfolge in einer ansteigenden Sendereihenfolge mit ansteigender erster Empfangszeitmarkierung der n Datenpakete in einem dritten Anordnungsschritt (211), wobei in der ansteigenden Sendereihenfolge ein Datenpaket mit kleinster erster Empfangszeitmarkierung an erster Position und ein Datenpaket mit größter erster Empfangszeitmarkierung an letzter Position angeordnet ist; und Bestimmen einer korrigierten ersten Empfangszeitmarkierung und einer korrigierten zweiten Empfangszeitmarkierung für ein Datenpaket in der ansteigenden Sendereihenfolge in einem Korrekturschritt (213), falls die erste Empfangszeitmarkierung des Datenpakets früher ist als die zweite Empfangszeitmarkierung eines in der ansteigenden Sendereihenfolge vor dem Datenpaket angeordneten Datenpakets, wobei die korrigierte erste Empfangszeitmarkierung des Datenpakets der zweiten Empfangszeitmarkierung des vor dem Datenpaket angeordneten Datenpakets entspricht, und wobei die korrigierte zweite Empfangszeitmarkierung des Datenpakets einer Summe aus der korrigierten ersten Empfangszeitmarkierung und der Individualbelegungszeitdauer des Datenpakets entspricht.

4. Verfahren nach Anspruch 3, wobei der erste Anordnungsschritt (201) umfasst:
Bestimmen eines Sende-Offsets für jedes Datenpaket in einem zweiten Bestimmungsschritt (215), wobei der Sende-Offset eines Datenpakets einer Summe der Individualbelegungszeitdauern der in der Sendereihenfolge dem Datenpaket vorgeordneten Datenpakete entspricht, und
Anordnen der n Datenpakete in der absteigenden Sendereihenfolge in einem vierten Anordnungsschritt (217) derart, dass ein Aussenden eines ersten Bits eines Datenpakets um den Sende-Offset des Datenpakets gegenüber dem Aussenden eines ersten Bits des ersten Datenpakets der absteigenden Sendereihenfolge verzögert ist.

5. Verfahren (200) nach einem der voranstehenden Ansprüche, wobei der Optimierungsschritt (203) umfasst:
Vertauschen der Reihenfolge eines i-ten Datenpakets und eines auf das i-te Datenpaket folgenden i+1-ten Datenpakets in einer m-ten Sendereihenfolge der n Datenpakete mit einer m-ten Gesamtbelegungszeitdauer der m-ten Sendereihenfolge und Bilden einer m+1-ten Sendereihenfolge mit einer m+1-ten Gesamtbelegungszeitdauer, wobei in der m+1-ten Sendereihenfolge die Reihenfolge des i-ten Datenpakets und des i+1-ten Datenpakets vertauscht ist, und wobei gilt 1≤i≤n-1 und n≥3, wobei i, m, n, k Natürliche Zahlen sind, in einem ersten Vertauschungsschritt (219),
Überprüfen, ob die m+1-te Gesamtbelegungszeitdauer kürzer ist als die m-te Gesamtbelegungszeitdauer in einem ersten Überprüfungsschritt (221);
falls die m+1-te Gesamtbelegungszeitdauer nicht kürzer ist als die m-te Gesamtbelegungszeitdauer:
Zurückvertauschen der Reihenfolge des i-ten Datenpakets und des i+1-ten Datenpakets und Wiederherstellen der m-ten Sendereihenfolge in einem ersten Zurückvertauschungsschritt (223);
Überprüfen, ob gilt: i=n-1 in der m-ten Sendereihenfolge in einem zweiten Überprüfungsschritt (225);
Falls gilt: i=n-1,
Aussenden der n Datenpakete auf Basis der m-ten Sendereihenfolge in dem Sendeschritt (205);
falls nicht gilt: i=n-1,
Setzen von i=i+1 in der m-ten Sendereihenfolge in einem ersten Setzschritt (227);
Fortfahren mit dem ersten Vertauschungsschritt (219) mit der m-ten Sendereihenfolge;
falls die m+1-te Gesamtbelegungszeitdauer kürzer ist als die m-te Gesamtbelegungszeitdauer,
Beibehalten der Vertauschung der Reihenfolge des i-ten Datenpakets und des i+1-ten Datenpakets in der m+1-ten Sendereihenfolge und Setzen von k=i in der m=m+1-ten Sendereihenfolge in einem zweiten Setzschritt (229),
Überprüfen, ob gilt: k<2 in der m+1-ten Sendereihenfolge, in einem dritten Überprüfungsschritt (231);
Falls gilt: k<2,
Fortfahren mit dem zweiten Überprüfungsschritt (225) mit der m+1-ten Sendereihenfolge,
Falls nicht gilt k<2:
Vertauschen der Reihenfolge des k-ten Datenpakets und des in der m+1-ten Sendereihenfolge dem k-ten Datenpaket vorstehenden k-1-ten Datenpakets und Bestimmen einer m+2-ten Sendereihenfolge mit einer m+2-ten Gesamtbelegungszeitdauer, wobei in der m+2-ten Sendereihenfolge die Reihenfolge des k-ten Datenpakets und des k-1-ten Datenpakets gegenüber der m+1-ten Sendereihenfolge vertauscht ist, in einem zweiten Vertauschungsschritt (233),
Überprüfen ob die m+2-te Gesamtbelegungszeitdauer kürzer ist als die m+1-te Gesamtbelegungszeitdauer in einem vierten Überprüfungsschritt (235),
Falls die m+2-te Gesamtbelegungszeitdauer nicht kürzer ist als die m+1-te Gesamtbelegungszeitdauer:
Zurückvertauschen der Reihenfolge des k-ten Datenpakets und des k-1-ten Datenpakets und Wiederherstellen der m+1-ten Sendereihenfolge in einem zweiten Zurückvertauschungsschritt (237),
Fortfahren mit dem zweiten Überprüfungsschritt (225) mit der m+1-ten Sendereihenfolge, Falls die m+2-te Gesamtbelegungszeitdauer kürzer ist als die m+1-te Gesamtbelegungszeitdauer:
Beibehalten der Vertauschung der Reihenfolge des k-ten Datenpakets und des k-1-ten Datenpakets in der m+2-ten Sendereihenfolge und Setzen von k=k-1 und m=m+2 in einem dritten Setzschritt (239),
Fortfahren mit dem dritten Überprüfungsschritt (231) mit der m-ten Sendereihenfolge.

6. Verfahren nach Anspruch 5, wobei der erste Vertauschungsschritt (219) mit dem ersten Datenpaket mit i=1 der ersten Sendereihenfolge mit m=1 beginnt.

7. Verfahren nach Anspruch 5 oder 6, wobei die erste Gesamtbelegungszeitdauer mit m=1 die korrigierte Gesamtbelegungszeitdauer der ansteigenden Sendereihenfolge ist.

8. Masterteilnehmer (101) für ein Automatisierungsnetzwerk (100), wobei der Masterteilnehmer (101) ausgebildet ist, ein Verfahren (200) nach einem der voranstehenden Ansprüche 1 bis 7 auszuführen.

9. Automatisierungsnetzwerk (100) mit wenigstes einem Masterteilnehmer (101) nach Anspruch 8, mehreren Slaveteilnehmern (103) und wenigstens einer Verbindungseinheit (105), die über ein Datenleitungsnetz (115) verbunden sind, wobei das Datenleitungsnetz (115) als ein Feldbussystem ausgebildet ist, wobei der Masterteilnehmer (101) ausgebildet ist, an die Slaveteilnehmer (103) zur Datenkommunikation Datenpakete in einem Umlauf auszusenden, in dem die Datenpakete vom Masterteilnehmer (101) and die Slaveteilnehmer (103) ausgesendet und von den Slaveteilnehmern (103) an den Masterteilnehmer (101) zurückgesendet werden, und wobei die Verbindungseinheit (105) ausgebildet ist, an die Slaveteilenhmer (103) eines bestimmten Segments (X) adressierte Datenpakete weiterzuleiten und die Datenpakete an den Masterteilnehmer (101) zurückzuleiten.

## Claims

1. Method (200) for real-time-capable data communication between subscribers in an automation network (100), wherein the automation network (100) comprises a master subscriber (101), multiple slave subscribers (103) and at least one connection unit (105), these being connected to one another via a network of data cables (115), wherein the network of data cables (115) is in the form of a field bus system, wherein the master subscriber (101) is designed to transmit data packets to the slave subscribers (103) for the data communication in a cycle in which the data packets are transmitted from the master subscriber (101) to the slave subscribers (103) and data packets are transmitted from the slave subscribers (103) to the master subscriber (101), and wherein the connection unit (105) is designed to forward data packets addressed to the slave subscribers (103) and to route the data packets back to the master subscriber (101), wherein the method (200) comprises the following method steps:
the master subscriber (101) arranging n data packets to be transmitted in a transmission order with a total occupancy duration of the transmission order in a first arrangement step (201), wherein the total occupancy duration comprises a period from the master subscriber (101) transmitting a first bit of a data packet that is transmitted first until the master subscriber receiving a last bit of a data packet that is received last,
the master subscriber (101) performing an optimization method in order to determine an optimized transmission order with a minimum total occupancy duration in an optimization step (203), wherein the optimization method comprises a finite number of at most n*(n-1)/2 pairwise swaps of orders of n data packets that follow one another in the transmission order and determinations of the total occupancy durations of the transmission orders generated by the swaps, and
the master subscriber (101) transmitting the n data packets in the optimized transmission order to the slave subscribers (103) in a transmission step (205).

2. Method (200) according to Claim 1, wherein the first arrangement step (201) comprises:
arranging the n data packets in a descending transmission order with descending individual cycle durations of the n data packets in a second arrangement step (207), wherein, in the descending transmission order, a data packet with the longest individual cycle duration is arranged in the first position and a data packet with the shortest individual cycle duration is arranged in the last position of the transmission order, and wherein the individual cycle duration of each data packet comprises a period from the master subscriber (101) transmitting a first bit of the data packet until the master subscriber (101) receiving a last bit of the data packet.

3. Method (200) according to Claim 2, wherein the first arrangement step (201) furthermore comprises:
determining a first reception timestamp for each of the n data packets of the descending transmission order in a first determination step (209), wherein the first reception timestamp of an arbitrary data packet of a transmission order is a time of receipt of the first bit of the respective data packet, and wherein a value of the first reception timestamp comprises a period from the master subscriber (101) transmitting the first bit of the first data packet of the transmission order until the master subscriber (101) receiving the first bit of the respective data packet of the transmission order, and determining a second reception timestamp for each of the n data packets of the descending transmission order, wherein the second reception timestamp corresponds to a sum of the value of the first reception timestamp and an individual occupancy duration of the data packet, wherein the individual occupancy duration of a data packet comprises a period from the transmission of a first bit of the data packet with respect to a first transmission timestamp until the transmission of a last bit of the data packet with respect to a second transmission timestamp, wherein the first transmission timestamp is a time of transmission of the first bit of the respective data packet, and wherein the second transmission timestamp is a time of transmission of the last bit of the data packet;
arranging the n data packets of the descending transmission order in an ascending transmission order with an ascending first reception timestamp of the n data packets in a third arrangement step (211), wherein, in the ascending transmission order, a data packet with the smallest first reception timestamp is arranged in the first position and a data packet with the greatest first reception timestamp is arranged in the last position; and determining a corrected first reception timestamp and a corrected second reception timestamp for a data packet in the ascending transmission order in a correction step (213) if the first reception timestamp of the data packet is earlier than the second reception timestamp of a data packet arranged before the data packet in the ascending transmission order, wherein the corrected first reception timestamp of the data packet corresponds to the second reception timestamp of the data packet arranged before the data packet, and wherein the corrected second reception timestamp of the data packet corresponds to a sum of the corrected first reception timestamp and the individual occupancy duration of the data packet.

4. Method according to Claim 3, wherein the first arrangement step (201) comprises:
determining a transmission offset for each data packet in a second determination step (215), wherein the transmission offset of a data packet corresponds to a sum of the individual occupancy durations of the data packets arranged upstream of the data packet in the transmission order, and
arranging the n data packets in the descending transmission order in a fourth arrangement step (217) such that transmission of a first bit of a data packet is delayed by the transmission offset of the data packet from the transmission of a first bit of the first data packet of the descending transmission order.

5. Method (200) according to one of the preceding claims, wherein the optimization step (203) comprises:
swapping the order of an ith data packet and of an i+1th data packet following the ith data packet in an mth transmission order of the n data packets with an mth total occupancy duration of the mth transmission order and forming an m+1th transmission order with an m+1th total occupancy duration, wherein, in the m+1th transmission order, the order of the ith data packet and of the i+1th data packet is swapped, and wherein 1<i≤n-1 and n≥3, wherein i, m, n and k are natural numbers, in a first swapping step (219),
checking whether the m+1th total occupancy duration is shorter than the mth total occupancy duration in a first checking step (221);
if the m+1th total occupancy duration is not shorter than the mth total occupancy duration:
swapping back the order of the ith data packet and of the i+1thdata packet and restoring the mth transmission order in a first swapping back step (223);
checking whether it is that case that: i=n-1 in the mth transmission order in a second checking step (225);
if it is the case that: i=n-1,
transmitting the n data packets on the basis of the mth transmission order in the transmission step (205);
if it is not the case that: i=n-1,
setting i=i+1 in the mth transmission order in a first setting step (227);
continuing with the first swapping step (219) with the mth transmission order;
if the m+1th total occupancy duration is shorter than the mth total occupancy duration,
keeping the swapped order of the ith data packet and of the i+1th data packet in the m+1th transmission order and setting k=i in the m=m+1th transmission order in a second setting step (229),
checking whether it is the case that: k<2 in the m+1th transmission order, in a third checking step (231);
if it is the case that: k<2,
continuing with the second checking step (225) with the m+1th transmission order,
if it is not the case that k<2:
swapping the order of the kth data packet and of the k-1th data packet preceding the kth data packet in the m+1th transmission order and determining an m+2th transmission order with an m+2th total occupancy duration, wherein, in the m+2th transmission order, the order of the kth data packet and of the k-1th data packet is swapped in comparison with the m+1th transmission order, in a second swapping step (233),
checking whether the m+2th total occupancy duration is shorter than the m+1th total occupancy duration in a fourth checking step (235),
if the m+2th total occupancy duration is not shorter than the m+1th total occupancy duration:
swapping back the order of the kth data packet and of the k-1th data packet and restoring the m+1th transmission order in a second swapping back step (237),
continuing with the second checking step (235) with the m+1th transmission order,
if the m+2th total occupancy duration is shorter than the m+1th total occupancy duration:
keeping the swapped order of the kth data packet and of the k-1th data packet in the m+2th transmission order and setting k=k-1 and m=m+2 in a third setting step (239),
continuing with the third checking step (231) with the mth transmission order.

6. Method according to Claim 5, wherein the first swapping step (219) begins with the first data packet with i=1 of the first transmission order with m=1.

7. Method according to Claim 5 or 6, wherein the first total occupancy duration with m=1 is the corrected total occupancy duration of the ascending transmission order.

8. Master subscriber (101) for an automation network (100), wherein the master subscriber (101) is designed to carry out a method (200) according to one of preceding Claims 1 to 7.

9. Automation network (100) containing at least a master subscriber (101) according to Claim 8, multiple slave subscribers (103) and at least one connection unit (105), these being connected via a network of data cables (115), wherein the network of data cables (115) is in the form of a field bus system, wherein the master subscriber (101) is designed to transmit data packets to the slave subscribers (103) for the data communication in a cycle in which the data packets are transmitted from the master subscriber (101) to the slave subscribers (103) and are transmitted back from the slave subscribers (103) to the master subscriber (101), and wherein the connection unit (105) is designed to forward data packets addressed to the slave subscribers (103) of a particular segment (X) and to route the data packets back to the master subscriber (101).

## Revendications

1. Procédé (200) de communication de données apte au temps réel entre des abonnés dans un réseau d'automatisation (100), dans lequel le réseau d'automatisation (100) comprend un abonné maître (101), plusieurs abonnés esclaves (103) et au moins une unité de liaison (105) qui sont reliés les uns aux autres par un réseau de lignes de données (115), le réseau de lignes de données (115) étant réalisé sous la forme d'un système de bus de terrain, dans lequel l'abonné maître (101) est réalisé pour émettre aux abonnés esclaves (103) des paquets de données pour la communication de données dans un cycle dans lequel les paquets de données sont émis par l'abonné maître (101) aux abonnés esclaves (103) et des paquets de données sont envoyés des abonnés esclaves (103) à l'abonné maître (101), et dans lequel l'unité de liaison (105) est réalisée pour transmettre des paquets de données adressés aux abonnés esclaves (103) et pour renvoyer les paquets de données à l'abonné maître (101),
le procédé (200) comprenant les étapes de procédé consistant à :
agencer, par l'abonné maître (101), n paquets de données à émettre dans un ordre d'envoi avec une durée d'occupation totale de l'ordre d'envoi dans une première étape d'agencement (201), la durée d'occupation totale comprenant une période allant de l'émission par l'abonné maître (101) d'un premier bit d'un paquet de données émis en premier jusqu'à une réception par l'abonné maître d'un dernier bit d'un paquet de données reçu en dernier,
exécuter, par l'abonné maître (101), un procédé d'optimisation pour déterminer un ordre d'envoi optimisé avec une durée d'occupation totale minimale dans une étape d'optimisation (203), dans lequel le procédé d'optimisation comprend un nombre fini d'un maximum de n*(n-1)/2 permutations par paires des ordres de n paquets de données consécutifs dans l'ordre d'envoi et de déterminations des durées d'occupation totales des ordres d'envoi générés par les permutations, et
émettre, par l'abonné maître (101), les n paquets de données dans l'ordre d'envoi optimisé aux abonnés esclaves (103) dans une étape d'envoi (205).

2. Procédé (200) selon la revendication 1, dans lequel la première étape d'agencement (201) comprend :
agencer les n paquets de données dans un ordre d'envoi descendant avec des durées de cycle individuelles descendantes des n paquets de données dans une deuxième étape d'agencement (207), dans lequel dans l'ordre d'envoi descendant, un paquet de données ayant la durée de cycle individuelle la plus longue est agencé en première position et un paquet de données ayant la durée de cycle individuelle la plus courte est agencé en dernière position de l'ordre d'envoi, et dans lequel la durée de cycle individuelle de chaque paquet de données comprend une période allant de l'émission par l'abonné maître (101) d'un premier bit du paquet de données jusqu'à une réception par l'abonné maître (101) d'un dernier bit du paquet de données.

3. Procédé (200) selon la revendication 2, dans lequel la première étape d'agencement (201) comprend en outre :
déterminer un premier marquage de temps de réception pour chacun des n paquets de données de l'ordre d'envoi descendant dans une première étape de détermination (209), dans lequel le premier marquage de temps de réception d'un paquet de données quelconque d'un ordre d'envoi est un instant d'une réception du premier bit du paquet de données respectif, et dans lequel une valeur du premier marquage de temps de réception comprend une période allant de l'émission par l'abonné maître (101) du premier bit du premier paquet de données de l'ordre d'envoi jusqu'à la réception par l'abonné maître (101) du premier bit du paquet de données respectif de l'ordre d'envoi, et
déterminer un deuxième marquage de temps de réception pour chacun des n paquets de données de l'ordre d'envoi descendant, dans lequel le deuxième marquage de temps de réception correspond à une somme de la valeur du premier marquage de temps de réception et d'une durée d'occupation individuelle du paquet de données, dans lequel la durée d'occupation individuelle d'un paquet de données comprend une période allant de l'émission d'un premier bit du paquet de données à un premier marquage de temps d'émission jusqu'à l'émission d'un dernier bit du paquet de données à un deuxième marquage de temps d'émission, dans lequel le premier marquage de temps d'émission est un instant de l'émission du premier bit du paquet de données respectif, et dans lequel le deuxième marquage de temps d'émission est un instant de l'émission du dernier bit du paquet de données ;
agencer les n paquets de données de l'ordre d'envoi descendant dans un ordre d'envoi ascendant avec un premier marquage de temps de réception ascendant des n paquets de données dans une troisième étape d'agencement (211), dans lequel, dans l'ordre d'envoi ascendant, un paquet de données ayant le plus petit premier marquage de temps de réception est agencé en première position et un paquet de données ayant le plus grand premier marquage de temps de réception est agencé en dernière position ; et
déterminer un premier marquage de temps de réception corrigé et un deuxième marquage de temps de réception corrigé pour un paquet de données dans l'ordre d'envoi ascendant dans une étape de correction (213) si le premier marquage de temps de réception du paquet de données est antérieur au deuxième marquage de temps de réception d'un paquet de données agencé dans l'ordre d'envoi ascendant avant le paquet de données, dans lequel le premier marquage de temps de réception corrigé du paquet de données correspond au deuxième marquage de temps de réception du paquet de données agencé avant le paquet de données, et dans lequel le deuxième marquage de temps de réception corrigé du paquet de données correspond à une somme du premier marquage de temps de réception corrigé et de la durée d'occupation individuelle du paquet de données.

4. Procédé selon la revendication 3, dans lequel la première étape d'agencement (201) comprend :
déterminer un décalage d'envoi pour chaque paquet de données dans une deuxième étape de détermination (215), dans lequel le décalage d'envoi d'un paquet de données correspond à une somme des durées d'occupation individuelles des paquets de données placés en amont du paquet de données dans l'ordre d'envoi, et
agencer les n paquets de données dans l'ordre d'envoi descendant dans une quatrième étape d'agencement (217) de telle sorte qu'une émission d'un premier bit d'un paquet de données est retardée du décalage d'envoi du paquet de données par rapport à l'émission d'un premier bit du premier paquet de données de l'ordre d'envoi descendant.

5. Procédé (200) selon l'une quelconque des revendications précédentes, dans lequel l'étape d'optimisation (203) comprend :
permuter l'ordre d'un paquet de données i et d'un paquet de données i+1 suivant le paquet de données i dans un ordre d'envoi m des n paquets de données avec une durée d'occupation totale m de l'ordre d'envoi m, et former un ordre d'envoi m+1 avec une durée d'occupation totale m+1, dans lequel, dans l'ordre d'envoi m+1, l'ordre du paquet de données i et du paquet de données i+1 est permuté, et dans lequel 1 ≤ i ≤ n-1 et n ≥ 3 sont vrais, où i, m, n, k sont des nombres naturels, dans une première étape de permutation (219),
vérifier si la durée d'occupation totale m+1 est plus courte que la durée d'occupation totale m dans une première étape de vérification (221) ;
si la durée d'occupation totale m+1 n'est pas plus courte que la durée d'occupation totale m :
inverser la permutation de l'ordre du paquet de données i et du paquet de données i+1, et rétablir l'ordre d'envoi m dans une première étape d'inversion de permutation (223) ;
vérifier si : i = n-1 est vrai dans l'ordre d'envoi m dans une deuxième étape de vérification (225) ;
si : i = n-1 est vrai,
émettre les n paquets de données sur la base de l'ordre d'envoi m dans l'étape d'envoi (205) ;
si : i = n-1 n'est pas vrai,
définir i = i+1 dans l'ordre d'envoi m dans une première étape de définition (227) ;
poursuivre la première étape de permutation (219) avec l'ordre d'envoi m ;
si la durée d'occupation totale m+1 est plus courte que la durée d'occupation totale m,
conserver la permutation de l'ordre du paquet de données i et du paquet de données i+1 dans l'ordre d'envoi m+1, et définir k = i dans l'ordre d'envoi m = m+1dans une deuxième étape de définition (229),
vérifier si : k < 2 est vrai dans l'ordre d'envoi m+1, dans une troisième étape de vérification (231) ;
si : k < 2 est vrai,
poursuivre la deuxième étape de vérification (225) avec l'ordre d'envoi m+1,
si k < 2 n'est pas vrai :
permuter l'ordre du paquet de données k et du paquet de données k-1 placé en amont du paquet de données k dans l'ordre d'envoi m+1, et déterminer un ordre d'envoi m+2 avec une durée d'occupation totale m+2, dans lequel, dans l'ordre d'envoi m+2, l'ordre du paquet de données k et du paquet de données k-1 est permuté par rapport à l'ordre d'envoi m+1, dans une deuxième étape de permutation (233),
vérifier si la durée d'occupation totale m+2 est plus courte que la durée d'occupation totale m+1 dans une quatrième étape de vérification (235),
si la durée d'occupation totale m+2 n'est pas plus courte que la durée d'occupation totale m+1 :
inverser la permutation de l'ordre du paquet de données k et du paquet de données k-1, et rétablir l'ordre d'envoi m+1 dans une deuxième étape d'inversion de permutation (237),
poursuivre la deuxième étape de vérification (225) avec l'ordre d'envoi m+1,
si la durée d'occupation totale m+2 est plus courte que la durée d'occupation totale m+1 :
conserver la permutation de l'ordre du paquet de données k et du paquet de données k-1 dans l'ordre d'envoi m+2, et définir k = k-1 et m = m+2 dans une troisième étape de définition (239),
poursuivre la troisième étape de vérification (231) avec l'ordre d'envoi m.

6. Procédé selon la revendication 5, dans lequel la première étape de permutation (219) commence par le premier paquet de données avec i = 1 du premier ordre d'envoi avec m = 1.

7. Procédé selon la revendication 5 ou 6, dans lequel la première durée d'occupation totale avec m = 1 est la durée d'occupation totale corrigée de l'ordre d'envoi ascendant.

8. Abonné maître (101) pour un réseau d'automatisation (100), l'abonné maître (101) étant réalisé pour exécuter un procédé (200) selon l'une quelconque des revendications précédentes 1 à 7.

9. Réseau d'automatisation (100) comprenant au moins un abonné maître (101) selon la revendication 8, plusieurs abonnés esclaves (103) et au moins une unité de liaison (105) qui sont reliées par un réseau de lignes de données (115), le réseau de lignes de données (115) étant réalisé sous la forme d'un système de bus de terrain, dans lequel l'abonné maître (101) est réalisé pour émettre aux abonnés esclaves (103) des paquets de données pour la communication de données dans un cycle dans lequel les paquets de données sont émis de l'abonné maître (101) aux abonnés esclaves (103) et sont renvoyés des abonnés esclaves (103) à l'abonné maître (101), et dans lequel l'unité de liaison (105) est réalisée pour transmettre des paquets de données adressés aux abonnés esclaves (103) d'un certain segment (X) et pour ramener les paquets de données à l'abonné maître (101).
